(19) Europäisches Patentamt
European Patent Office
Office européen des brevets

(11) EP 3 519 451 B1

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(21) Anmeldenummer: **17772050.5**

(22) Anmeldetag: **25.09.2017**

(51) Int Cl.:
***C08F 6/00*** *(2006.01)* ***C08L 51/04*** *(2006.01)*
***C08L 25/12*** *(2006.01)* ***C08L 69/00*** *(2006.01)*

(86) Internationale Anmeldenummer:
**PCT/EP2017/074168**

(87) Internationale Veröffentlichungsnummer:
**WO 2018/060111 (05.04.2018 Gazette 2018/14)**

(54) **VERBESSERTES VERFAHREN ZUR HERSTELLUNG VON ASA-KUNSTSTOFFEN**

IMPROVED PROCESS FOR PRODUCING ASA PLASTICS

PROCÉDÉ AMÉLIORÉ POUR LA FABRICATION DE PLASTIQUES ASA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2016 EP 16190740**

(43) Veröffentlichungstag der Anmeldung:
**07.08.2019 Patentblatt 2019/32**

(73) Patentinhaber: **INEOS Styrolution Group GmbH
60325 Frankfurt am Main (DE)**

(72) Erfinder:
- **FISCHER, Wolfgang
69190 Walldorf (DE)**
- **JANSEN, Ulrich
41541 Dormagen (DE)**
- **SCHULZ, Tobias
51103 Köln (DE)**

(74) Vertreter: **Jacobi, Markus Alexander
Patentanwälte
Isenbruck Bösl Hörschler PartG mbB
Eastsite One
Seckenheimer Landstrasse 4
68163 Mannheim (DE)**

(56) Entgegenhaltungen:
**WO-A1-2014/122179 DE-A1- 19 547 975**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 519 451 B1

**Beschreibung**

Die Erfindung betrifft ein Verfahren zur Herstellung von thermoplastischen Formmassen auf Basis von Acrylnitril-Styrol-Acrylat-Copolymeren (ASA) mit verbesserten Oberflächeneigenschaften, insbesondere einer verbesserten Beständigkeit der Oberflächenqualität bei einer Lagerung in feucht-warmer Umgebung. Zudem weisen die erfindungsgemäß hergestellten Formmassen insbesondere einen verminderten Gehalt an Restmonomeren auf. Ferner betrifft die Erfindung die Verwendung eines Fließbetttrockners und/oder eines Stromtrockners bei der Herstellung von thermoplastischen ASA-Formmassen zur Verbesserung der Oberflächenqualität. Ferner betrifft die Erfindung die Verwendung eines Fließbetttrockners und/oder eines Stromtrockners bei der Herstellung von thermoplastischen ASA-Formmassen zur Verminderung des Gehalts an Restmonomeren. Ebenfalls Gegenstand der Erfindung sind ASA-Formmassen, die mittels des erfindungsgemäßen Verfahrens hergestellt werden können, sowie Formteile (z.B. Formkörper, Folien und Beschichtungen) hergestellt aus den thermoplastischen Formmassen.

Es ist bekannt, Styrol-Acrylnitril-Copolymere (SAN) oder Methylstyrol-Acrylnitril-Copolymere (z.B. Alpha-Methylstyrol-Acrylnitril-Copolymere, AMSAN) durch Einarbeiten von Pfropfkautschuken, beispielsweise vernetzten Polyacrylat-Kautschuken, im Hinblick auf eine bessere Schlagzähigkeit zu modifizieren. Solche Acrylnitril-Styrol-Acrylat-Copolymere (ASA) werden seit vielen Jahren in großen Mengen als thermoplastische Formmassen für die Herstellung von Formteilen aller Art eingesetzt. Grundsätzlich kann die Herstellung von solchen schlagzäh-modifizierten SAN-Formmassen durch Pfropfpolymerisation von Styrol und Acrylnitril in Gegenwart eines Pfropfkautschuks und/oder durch nachträgliches Abmischen eines Pfropfkautschuks (Pfropflatex) mit einer separat hergestellten polymeren Styrol-Acrylnitril-Matrix erfolgen. Dabei kann das Eigenschaftsspektrum der Formmassen und der daraus hergestellten Formteile in weiten Bereichen variiert werden. Beispiele für kommerziell erhältliche ASA-Copolymere sind Produkte der Serie Luran® S (von Ineos Styrolution, Frankfurt). Auch Blends aus ASA und Polycarbonat (ASA/PC) sind beispielsweise unter dem Namen Luran® SC (Ineos Styrolution) erhältlich. Blends aus ASA und Polyamid (ASA/PA) sind beispielsweise unter dem Namen Terblend® S (Ineos Styrolution) erhältlich.

Es ist üblich, die mittlere Teilchengröße des Pfropfkautschuks gezielt einzustellen, da die Größe der Kautschukpartikel einen wesentlichen Einfluss auf die physikalischen Eigenschaften der späteren thermoplastischen Formmasse hat.

Dies ist beispielsweise in WO 2015/078751 beschrieben. Häufig wird das Pfropfcopolymer (Pfropfkautschuk) nach der Pfropfpolymerisation durch Zugabe einer Salz- und/oder Säurelösung als Koagulierungsmittel gefällt, gewaschen und getrocknet. Im Dokument EP-A 0 734 825 wird die Entwässerung und Trocknung von ASA-Pfropfcopolymeren in einem Extruder beschrieben.

Neben den vorteilhaften mechanischen Eigenschaften von ASA-Formmassen, wie hohe Zähigkeit (Schlagzähigkeit, Kerbschlagzähigkeit), hohe Elastizität (E-Modul), gute Verarbeitbarkeit (thermoplastische Fließfähigkeit, insbesondere ein geeigneter Schmelzflussindex, MVR) und hohe Wärmeformbeständigkeit, sind insbesondere die Oberflächeneigenschaften, wie Glanz, Glätte, Homogenität, gleichmäßiges Aussehen, von besonderer Bedeutung. ASA-Formmassen, bzw. die daraus hegestellten Formteile, sollen insbesondere eine hohe Oberflächenhomogenität, d.h. eine Oberfläche ohne Störungen, wie Vertiefungen, Risse oder Salzeinlagerungen, aufweisen. Ganz wesentlich für bestimmte Einsatzgebiete ist in diesem Zusammenhang der Erhalt der Oberflächenhomogenität unter feucht-warmen Umgebungsbedingungen. Eine feucht-warme Umgebung bezeichnen im allgemeinen Bedingungen, die eine Temperatur und eine Luftfeuchte umfassen, welche über den üblichen Werten von 15 bis 25 °C und 30 bis 60 % relativer Luftfeuchte liegen. Zudem können feucht-warme Umgebungsbedingungen insbesondere den direkten Kontakt der betreffenden Oberfläche mit flüssigem Wasser, z.B. Kondenswasser, umfassen.

Herstellungsbedingt vorhandenen Salzeinlagerungen in der ASA-Formmasse, bzw. in dem daraus hergestellten Formteil, bewirken oftmals eine Verschlechterung der Oberflächenqualität, was insbesondere nach der Extrusion der Formmasse in Erscheinung tritt. Zudem nehmen die Salzeinlagerungen unter feucht-warmen Umgebungsbedingungen Feuchtigkeit auf, vergrößern sich und lösen sich gegebenenfalls auf. Hierbei entstehen Defekte an der Oberfläche (Stippen), wie weiße Flecken, Vertiefungen (Kavitäten) und/oder Risse, was zu einer Verschlechterung der Oberflächenqualität, insbesondere der Oberflächenhomogenität, führt.

Die im Stand der Technik beschriebenen ASA-Formmassen weisen zwar gute mechanische Eigenschaften und eine gute Verarbeitbarkeit auf, allerdings verschlechtert sich typischerweise die Oberflächenhomogenität der Formmassen unter feucht-warmen Umgebungsbedingungen.

Die Salzeinlagerungen in ASA-Formmassen resultieren in der Regel aus Salzen und Säuren, die bei der Herstellung der ASA-Formmassen eingesetzt werden, insbesondere aus den Salzen und Säuren, welche bei der Fällung des Pfropfcopolymers als Koagulierungsmittel eingesetzt werden, beispielsweise Alkali-, Erdalkali- oder AluminiumSalze, oftmals Chloride, Sulfate, Nitrate, Phosphate, Acetate, Formiate, Aluminate und/oder Carbonate. Das Entfernen dieser Salzfracht in nachgeschalteten Wasch- und Reinigungsschritten ist oftmals aufwendig und nur unter hohem Energie- und/oder Wasseraufwand möglich.

Eine weitere Möglichkeit, die nachteilige Bildung von Oberflächenstörungen (Stippen) zu vermeiden, besteht

darin, die Formmasse nach der feucht-warmen Lagerung nochmals zu extrudieren, was einen hohen zusätzlichen technischen Aufwand darstellt.

In den Dokumenten EP-A 1567596, WO 2013/160029 und WO 2013/160249 sind kautschukhaltige Polymerzusammensetzungen und Verfahren zu deren Herstellung beschrieben, wobei durch die Wahl der Fällungsbedingungen des Kautschuks Zusammensetzungen mit einer verbesserten Oberfläche nach Lagerung unter warm-feuchten Bedingungen erhalten werden sollen.

Das Dokument WO 2014/122179 (D1) beschreibt ein Verfahren zur Herstellung von Polymer-Zusammensetzungen mit verbesserten Oberflächeneigenschaften, wobei die Polymer-Zusammensetzungen mindestens ein durch Emulsionspolymerisation hergestelltes Pfropfcopolymer umfassen. Das Verfahren gemäß WO 2014/122179 umfasst das Lagern eines Granulates enthaltend das durch Emulsionspolymerisation hergestellte Pfropfpolymer in Wasser in einem Tauchbecken, Silo oder Mischer für mindestens 24 h. Das beschriebene Verfahren soll thermoplastische Formmassen bereitstellen, die eine Verminderung der Oberflächenstörungen nach feucht-warmer Lagerung durch herstellungsbedingten Salzeinlagerungen aufweisen.

Weiterhin ist es wünschenswert, ASA-Formmassen mit einem möglichst niedrigen Gehalt an Restmonomeren, insbesondere an Acrylnitril und/oder Styrol, zu erhalten. Im Stand der Technik sind verschiedene Verfahren beschrieben, durch die der Gehalt an Monomeren im Polymer reduziert werden soll. Das Dokument DE-A 10 2007 029 010 beschreibt ein Verfahren zum Compoundieren von zwei Polymeren, beispielsweise ABS und PC, unter Verwendung eines Extruders mit Entgasungszonen, wobei ein inertes Schleppmittel eingesetzt wird. Das Dokument DE-A 38 40 293 beschriebt ein Verfahren zum Entfernen von niedermolekularen Verbindungen aus Polymeren, wobei ein inertes Extraktionsgas in einem Extruder mit dem Polymer vermischt wird. Das Dokument WO 2010/094416 ist gerichtet auf ein Verfahren zur Herstellung einer Polymerzusammensetzung, z.B. PC/ABS-Blends, mit einem reduzierten Anteil an flüchtigen Verbindungen, wobei die Polymere, welche einen gewissen Wasseranteil aufweisen, in einem Extruder mit spezieller Entgasungszone aufgeschmolzen werden. EP A 1415693 beschreibt ein Verfahren, bei dem eine Mischung aus Polymer, Restmonomeren, Oligomeren und Lösungsmittel durch mehrere Düsen in einen Entgasungsbehälter extrudiert wird.

Nachteilig ist, dass die im Stand der Technik beschriebenen Verfahren zur Reduzierung des Gehalts an Restmonomeren oftmals einen hohen apparativen Aufwand, den Einsatz eines Extraktionsgases und das erneute Aufschmelzen des Polymers nach der Herstellung erfordern.

Es besteht ein großer Bedarf, ein einfaches und kostengünstiges Herstellungsverfahren für ASA-Formmassen bereitzustellen, wobei die erhaltenen Formmassen, neben den bekannten guten mechanischen Eigenschaften, eine verbesserte Oberflächenqualität, bevorzugt eine verbesserte Stabilität der Oberflächenhomogenität gegenüber einer feucht-warmen Umgebung aufweisen. Zudem soll der Gehalt an Restmonomeren im ASA-Pfropfcopolymer und damit in der ASA-Formmasse verringert werden, ohne dass ein zusätzlicher apparativ aufwendiger Extrudier-Schritt notwendig ist. Insbesondere soll der Gesamtgehalt an Restmonomeren im ASA-Pfropfcopolymer auf einen Wert unter 200 ppm, bevorzugt unter 100 ppm, jeweils bezogen auf das trockenen ASA-Pfropfcopolymer, vermindert werden.

Es wurde überraschend gefunden, dass besonders vorteilhafte ASA-Formmassen erhalten werden, wenn das Trocknen des ASA-Pfropfcopolymers (Pfropfkautschuks), insbesondere nach dem Fällen, in einem Fließbetttrockner (auch Wirbelbett-Trockner genannt) oder einem Stromtrockners (auch Flashtrockner genannt) oder mit einer Kombination eines Fließbetttrockners und eines Stromtrockners erfolgt. Es wurde insbesondere gefunden, dass sich eine schnelle und gleichmäßige Trocknung - wie sie in einem Fließbetttrockner oder Stromtrockner bei geeigneten Temperaturen und Verweilzeiten erreicht werden kann - vorteilhaft auf die Oberflächenqualität der ASA-Formmassen bzw. daraus hergestellter Formteile auswirkt. Durch das erfindungsgemäße Verfahren können überraschenderweise insbesondere ASA-Formmassen mit möglichst wenig und/oder möglichst kleinen Salzeinlagerungen in einfacher Weise erhalten werden.

Es wurde zudem überraschend gefunden, dass durch die beschriebene Trocknung des Pfropfcopolymers der Gehalt an Restmonomeren, insbesondere der Gehalt an Acrylnitril und/oder Styrol, deutlich reduziert werden kann. Die mittels des erfindungsgemäßen Verfahrens hergestellten ASA-Formmassen zeichnen sich daher durch einen sehr geringen Gehalt an Restmonomeren aus, ohne dass ein zusätzlicher Extrudier- und Entgasungsschritt notwendig ist. Insbesondere können ASA-Pfropfcopolymere mit einem Gesamtgehalt an Restmonomeren unter 200 ppm, insbesondere unter 100 ppm, jeweils bezogen auf das ASA-Pfropfcopolymer, erhalten werden.

Es wurde insbesondere gefunden, dass der Gehalt an Restmonomer deutlich gesenkt werden kann, wenn das Pfropfcopolymer (Pfropflatex) nach dem Erreichen eines Wassergehalts von 2 Gew.-%, insbesondere nach Erreichen eines Wassergehaltes von 1 Gew.-%, 5 bis 30 min weiter getrocknet wird. Insbesondere werden hierbei die übrigen Eigenschaften, z.B. mechanischen Eigenschaften, der ASA-Formmassen nicht nachteilig beeinflusst.

Fließbetttrockner sind Geräte, die absatzweise oder kontinuierlich, insbesondere kontinuierlich betrieben werden. Fließbetttrockner werden zum Beispiel in Krischer/Kröll, Trocknungstechnik (Zweiter Band, Trockner und Trocknungsverfahren, Springer-Verlag, 1959, S. 275-282) beschrieben. Es ist zudem bekannt Fließbetttrockner einzusetzen, die einen oder mehrere ins Fließbett integrierte Wärmetauscher aufweisen. Durch den Einsatz von Wärmetauschern kann insbesondere die nötige Trocknungsenergie ins Fließbett eingebracht werden. Solche Fließbetttrockner sind beispielsweise in D. Gehrmann, et al., Trocknungstechnik in der Lebensmittelindustrie (Behr's Verlag GmbH & Co.KG,

1. Auflage 2009, Abschnitt 2.5.3 Statische Wirbelschichttrockner, Seite 143-145) beschrieben.

Strom- oder Flashtrockner sind Geräte, die insbesondere kontinuierlich betrieben werden. Sie sind beispielsweise in Krischer/Kröll, Trocknungstechnik (Zweiter Band, Trockner und Trocknungsverfahren von K. Kröll, Springer-Verlag, 1959, S. 282 ff) beschrieben. Die Publikation Yongchun Z. et al. ("Explosion Risk Management of ABS Powder Processes", Proceedings of the 8th International Conference on Measurement and Control of Granular Materials (MCGM), 2009) beschreibt die sicherheitstechnischen Probleme bei der Trocknung von ABS in Fließbetttrocknern.

Gegenstand der Erfindung ist ein Verfahren zur Herstellung einer thermoplastischen Formmasse enthaltend (oder bestehend aus):

A: 5 bis 90 Gew.-%, bevorzugt 40 bis 90 Gew.-%, insbesondere bevorzugt 50 bis 90 Gew.-%, mindestens eines thermoplastischen Copolymers A hergestellt aus:

A1: 50 bis 95 Gew.-%, bevorzugt 60 bis 90 Gew.-%, besonders bevorzugt 60 bis 85 Gew.-%, bezogen auf das Copolymer A, eines Monomers A1, ausgewählt aus Styrol, $\alpha$-Methylstyrol oder Mischungen von Styrol und mindestens einem weiteren Monomer ausgewählt aus $\alpha$-Methylstyrol, p-Methylstyrol und $C_1$-$C_8$-Alkyl(meth)acrylat (bevorzugt $C_1$-$C_4$-Alkyl(meth)acrylat z.B. Methyl-methacrylat oder Ethylmethacrylat),

A2: 5 bis 50 Gew.-%, bevorzugt 10 bis 40 Gew.-%, besonders bevorzugt 15 bis 40 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid),

B: 5 bis 70 Gew.-%, bevorzugt 10 bis 60 Gew.-%, besonders bevorzugt 10 bis 50 Gew.-%, mindestens eines Pfropfcopolymers B, enthaltend:

B1: 50 bis 90 Gew.-%, bevorzugt 55 bis 90 Gew.-%, besonders bevorzugt 55 bis 65 Gew.-%, bezogen auf das Pfropfcopolymer B, mindestens einer Pfropfgrundlage B1, welche erhalten wird durch Emulsionspolymerisation von:

B11: 70 bis 99,9 Gew.-%, bevorzugt 87 bis 99,5 Gew.-%, bezogen auf die Pfropfgrundlage B1, mindestens eines $C_1$-$C_8$-Alkyl(meth)acrylat, bevorzugt n-Butylacrylat, als Monomer B11;

B12: 0,1 bis 10 Gew.-%, bevorzugt 0,1 bis 5 Gew.-%, insbesondere bevorzugt 0,5 bis 3 Gew.-%, besonders bevorzugt 1 bis 2,5 Gew.-%, bezogen auf die Pfropfgrundlage B1, mindestens eines polyfunktionalen vernetzenden Monomers B12; bevorzugt ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA);

B13: 0 bis 29,5 Gew.-%, bevorzugt 0 bis 20 Gew.-%, besonders bevorzugt 0 bis 10 Gew.-%, bezogen auf die Pfropfgrundlage B1, mindestens eines weiteren Monomers B13 ausgewählt aus Styrol, $\alpha$-Methylstyrol, $C_1$-$C_4$-Alkylstyrol, Acrylnitril, Methacrylnitril, Isopren, Butadien, Chloropren, Methylmethacrylat, Alkylenglykol-di(meth)acrylat und Vinylmethylether;

wobei die Summe B11 + B12 + B13 gerade 100 Gew.-% ergibt; und

B2: 10 bis 50 Gew.-%, bevorzugt 10 bis 45 Gew.-%, besonders bevorzugt 35 bis 45 Gew.-%, bezogen auf das Pfropfcopolymer B, mindestens einer Pfropfhülle B2, welche erhalten wird durch Emulsionspolymerisation in Gegenwart der mindestens einen Pfropfgrundlage B1 von:

B21: 50 bis 100 Gew.-%, bevorzugt 50 bis 95 Gew.-%, besonders bevorzugt 65 bis 80 Gew.-%, insbesondere bevorzugt 75 bis 80 Gew.-%, bezogen auf die Pfropfhülle B2, eines Monomers B21, ausgewählt aus Styrol, $\alpha$-Methylstyrol oder Mischungen von Styrol und mindestens einem weiteren Monomer ausgewählt aus $\alpha$-Methylstyrol, p-Methylstyrol und $C_1$-$C_4$-Alkyl(meth)acrylat (z.B. Methylmethacrylat, Ethylmethacrylat); und

B22: 0 bis 50 Gew.-%, bevorzugt 5 bis 50 Gew.-%, besonders bevorzugt 20 bis 35 Gew.-%, insbesondere bevorzugt 20 bis 25 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid);

wobei die Gesamtsumme aus Pfropfgrundlage B1 und Pfropfhülle B2 gerade 100 Gew.-% ergibt; und

C: 0 bis 90 Gew.-%, bevorzugt 0 bis 80 Gew.-%, besonders bevorzugt 0 bis 35 Gew.-%, oftmals 0,1 bis 5 Gew.-% mindestens einer weiteren polymeren Komponente C, und

K: 0 bis 40 Gew.-%, besonders bevorzugt 0 bis 5 Gew.-%, oftmals 0,1 bis 5 Gew.-% mindestens einer weiteren Komponente K ausgewählt aus Additiven und Hilfsmitteln,

umfassend die Schritte:

a) Fällen des mindestens einen Pfropfcopolymers B nach der Emulsionspolymerisation durch Zugabe einer Fällungslösung enthaltend mindestens ein Salz;

b) mechanisches Entwässern des gefällten Pfropfcopolymers B, bevorzugt mittels Zentrifugation und/oder Filtration, wobei ein Pfropfcopolymer B mit einem Wassergehalt von kleiner oder gleich 50 Gew.-% erhalten wird;

c) Trocknen des entwässerten Pfropfcopolymers B unter Verwendung eines Trocknungsgases, wobei das Pfropfcopolymer B in dem Trocknungsgas bewegt wird und das Trocknungsgas eine Temperatur im Bereich von 50 bis 160 °C aufweist;

d) Vermischen des thermoplastischen Copolymers A, des getrockneten Pfropfcopolymers B, optional der weiteren polymeren Komponente(n) C und optional der weiteren Komponente(n) K.

Die mittels des erfindungsgemäßen Verfahrens erhaltenen Formmassen zeichnen sich insbesondere dadurch aus, dass nach Lagerung der Formmasse bzw. der daraus hergestellten Formteile unter feucht-warmen Umgebungsbedingungen signifikant weniger oder gar keine Oberflächenstörung vorhanden sind, die insbesondere durch Salzeinlagerungen (so genannte Salzstippen) verursacht werden.

Besonders bevorzugt weisen die nach dem erfindungsgemäßen Verfahren hergestellten thermoplastischen ASA-Formmassen bzw. daraus hergestellte Formteile nach Lagerung unter feucht-warmen Umgebungsbedingungen auf einer Oberfläche von 150 $cm^2$ weniger als 15, bevorzugt weniger als 10, besonders bevorzugt weniger als 5 Oberflächenstörungen auf. Die sonstigen Eigenschaften der mit dem erfindungsgemäßen Verfahren erhaltenen ASA-Formmassen, wie z.B. mechanische Eigenschaften, werden nicht nachteilig beeinflusst.

Gegenstand der Erfindung ist zudem die Verwendung eines Fließbetttrockners (Wirbelschicht-Trockner) und/oder eines Stromtrockners (Flashtrockner) bei der Herstellung einer thermoplastischen ASA-Formmasse wie oben beschrieben zur Trocknung des im Folgenden näher beschriebenen Pfropfcopolymers B zur Verbesserung der Oberflächenqualität der thermoplastischen ASA-Formmasse, bzw. des daraus hergestellten Formteils. Insbesondere betrifft die erfindungsgemäße Verwendung die Verbesserung der Oberflächenqualität, wobei sich die Oberfläche der thermoplastischen Formmasse, bzw. des daraus hergestellten Formteils, während der Lagerung unter feucht-warmen Umgebungsbedingungen nicht nachteilig verändert.

Unter ASA-Formmassen im Sinne der vorliegenden Erfindung sind Formmassen enthaltend mindestens 10 % Gew.-%, bevorzugt mindestens 70 Gew.-%, besonders bevorzugt mindestens 95 Gew.-%, des thermoplastischen Copolymers A und des Pfropfcopolymers B (in der Summe) wie oben beschrieben zu verstehen. Bevorzugt enthält die ASA-Formmasse ausschließlich das thermoplastische Copolymer A und das Pfropfcopolymer B als polymere Komponenten. ASA-Formmassen im Sinne der vorliegenden Erfindung sind auch Polymerblends enthaltend das thermoplastische Copolymer A und das Pfropfcopolymer B wie oben beschrieben und mindestens eine weitere polymere Komponente C, insbesondere ein kautschukfreies nicht aus Vinylmonomeren aufgebautes Thermoplastharz, beispielsweise ein Polykondensat, bevorzugt ausgewählt aus Polycarbonaten, Polyestercarbonaten, Polyestern und Polyamiden.

Der Ausdruck (Meth)acryl, beispielsweise in der Bezeichnung (Meth)acrylsäure oder (Meth)acrylsäure-$C_1$-$C_8$-alkylester, umfasst im Sinne der vorliegenden Erfindung die entsprechenden Acryl- und/oder Methacryl-Verbindungen.

Die vorliegende Erfindung betrifft darüber hinaus thermoplastische Formmassen, die nach dem im Folgenden beschriebenen erfindungsgemäßen Verfahren hergestellt werden können, und Formteile hergestellt aus der erfindungsgemäßen Formmasse.

Thermoplastisches Copolymer A

Bevorzugt handelt es sich bei dem thermoplastischen Copolymer A um ein kautschukfreies Copolymer A.

In einer bevorzugten Ausführungsform handelt es sich bei Monomer A1 um Styrol oder α-Methylstyrol, bei Monomer A2 um Acrylnitril. In einer weiter bevorzugten Ausführungsform handelt es sich bei Monomer A1 um eine Mischung aus Styrol und α-Methylstyrol und bei Monomer A2 um Acrylnitril. Bevorzugt enthält die beschriebene Monomer-Mischung A1 mindestens 10 Gew.-%, bevorzugt mindestens 50 Gew.-% und besonders bevorzugt mindestens 90 Gew.-%, bezogen auf das gesamte Monomer A1 Styrol.

Insbesondere bevorzugt wird das thermoplastische Copolymer A hergestellt aus (bzw. besteht aus):

50 bis 95 Gew.-%, bevorzugt 60 bis 90 Gew.-%, besonders bevorzugt 60 bis 85 Gew.-%, bezogen auf das Copolymer A, des Monomers A1, ausgewählt aus Styrol, α-Methylstyrol oder Mischungen von Styrol und α -Methylstyrol, und

5 bis 50 Gew.-%, bevorzugt 10 bis 40 Gew.-%, besonders bevorzugt 15 bis 40 Gew.-%, bezogen auf das Copolymer A, eines Monomers A2, ausgewählt aus Acrylnitril oder Mischungen von Acrylnitril und Methacrylnitril.

Besonders bevorzugt ist ein thermoplastisches Copolymer A mit weniger oder gleich 35 Gew.-%, bezogen auf das gesamte Copolymer A, an Acrylnitril.

Das thermoplastische Copolymer A weist vorzugsweise mittlere Molekulargewichte $M_w$ im Bereich von 20.000 bis 200.000 g/mol auf. Bevorzugt weist das thermoplastische Copolymer A Grenzviskositäten [η] im Bereich von 20 bis 110 ml/g (gemessen in Dimethylformamid bei 25 °C) auf. Das thermoplastische Copolymer A weist vorzugsweise eine Viskositätszahl (bestimmt gemäß DIN 53726) im Bereich von 50 bis 100 $cm^3/g$, bevorzugt von 55 bis 85 $cm^3/g$ auf.

Einzelheiten zur Herstellung des thermoplastischen Copolymers A sind beispielsweise in DE-A 24 20 358 und DE-A 27 24 360 beschrieben. Ebenso geeignete thermoplastischen Copolymere A sind auch in DE-A 1 971 3509 beschrieben.

Die thermoplastischen Copolymere können sowohl durch rein thermische Initiierung als auch durch Zusatz von Initiatoren, insbesondere von radikalischen Initiatoren, beispielsweise von Peroxiden, hergestellt werden. Geeignete thermoplastische Copolymere A können bevorzugt durch Masse- oder Lösungspolymerisation hergestellt werden.

Pfropfcopolymer B

Erfindungsgemäß enthält die Formmasse mindestens ein Pfropfcopolymer B, insbesondere einen ASA-Pfropfkautschuk, enthaltend 50 bis 90 Gew.-%, bevorzugt 55 bis 90 Gew.-%, bezogen auf das Pfropfcopolymer B, mindestens einer Pfropfgrundlage B1, und 10 bis 50 Gew.-%, bevorzugt 10 bis 45 Gew.-%, bezogen auf das Pfropfcopolymer B, mindestens einer Pfropfhülle B2, bevorzugt ein bis drei Pfropfhüllen B2, wobei die Gesamtsumme aus Pfropfgrundlage B1 und Pfropfhülle(n) B2 gerade 100 Gew.-% ergibt.

In einer bevorzugten Ausführungsform enthält das Pfropfcopolymer B 10 bis 50 Gew.-%, bevorzugt 20 bis 50 Gew.-%, besonders bevorzugt 25 bis 45 Gew.-%, bezogen auf das Pfropfcopolymer B, mindestens einer Pfropfhülle B2, welche erhalten wird durch Emulsionspolymerisation von:

B21: 50 bis 95 Gew.-%, bevorzugt 65 bis 80 Gew.-%, besonders bevorzugt 70 bis 80 Gew.-%, bezogen auf die Pfropfhülle B2, eines Monomers B21, ausgewählt aus Styrol, α-Methylstyrol oder Mischungen von Styrol und mindestens einem weiteren Monomer ausgewählt aus α-Methylstyrol, p-Methylstyrol und $C_1$-$C_4$-Alkyl(meth)acrylat (z.B. Methylmethacrylat, Ethylmethacrylat), bevorzugt ausgewählt aus Styrol, α-Methylstyrol oder Mischungen von Styrol mit α-Methylstyrol oder Methylmethacrylat; und

B22: 5 bis 50 Gew.-%, bevorzugt 20 bis 35 Gew.-%, besonders bevorzugt 20 bis 30 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid), bevorzugt ausgewählt aus Acrylnitril oder Mischungen von Acrylnitril und Methacrylnitril;

wobei die Summe B21 + B22 gerade 100 Gew.-% ergibt.

Bevorzugt besteht das Pfropfcopolymer B aus der Pfropfgrundlage B1 wie oben beschrieben, bevorzugt aus einem vernetzten Polybutylacrylat-Kautschuk, und genau einer Pfropfhülle B2, welche erhalten wird durch Emulsionspolymerisation der Monomere B21 und B22 wie beschrieben, insbesondere von Styrol und Acrylnitril, in Gegenwart der Pfropfgrundlage B1 (einstufige Pfropfhülle B2). Weiterhin bevorzugt besteht das Pfropfcopolymer B aus der Pfropfgrundlage B1 wie oben beschrieben, bevorzugt aus einem vernetzten Polybutylacrylat-Kautschuk, und zwei Pfropfhüllen B2'

und B2", wobei B2' erhalten wird durch Emulsionspolymerisation des Monomers B21 wie beschrieben, insbesondere von Styrol, in Gegenwart der Pfropfgrundlage B1 und wobei die Pfropfhülle B2" erhalten wird durch anschließende Emulsionspolymerisation der Monomere B21 und B22 wie beschrieben, insbesondere von Styrol und Acrylnitril, in Gegenwart der mit B2' gepfropften Pfropfgrundlage B1 (zweistufige Pfropfhülle B2).

Besonders bevorzugt wird die mindestens eine Pfropfgrundlage B1 erhalten durch Emulsionspolymerisation von:

B11: bevorzugt 87 bis 99,5 Gew.-%, bezogen auf die Pfropfgrundlage B1, mindestens $C_4$-$C_8$-Alkyl(meth)acrylats, insbesondere bevorzugt n-Butylacrylat und/oder 2-Ethylhexylacrylat, besonders bevorzugt ausschließlich n-Butylacrylat;

B12: 0,5 bis 5 Gew.-%, bevorzugt 0,5 bis 3 Gew.-%, besonders bevorzugt 1 bis 2,5 Gew.-%, bezogen auf die Pfropfgrundlage B1, mindestens eines polyfunktionalen, vernetzenden Monomers B12; bevorzugt ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA), insbesondere bevorzugt Allyl(meth)acrylat und/oder Dihydrodicyclopentadienylacrylat (DCPA);

B13: 0 bis 29,9 Gew.-%, bevorzugt 0 bis 10 Gew.-%, besonders bevorzugt 0,5 bis 10 Gew.-%, bezogen auf die Pfropfgrundlage B1, mindestens eines weiteren copolymerisierbaren, monoethylenisch ungesättigten Monomers B13, ausgewählt aus Styrol, $\alpha$-Methylstyrol, $C_1$-$C_4$-Alkylstyrol, Acrylnitril, Methacrylnitril, Isopren, Butadien, Chloropren, Methylmethacrylat, Alkylenglykol-di(meth)acrylat und Vinylmethylether;

wobei die Summe B11 + B12 +B13 gerade 100 Gew.-% ergibt.

Die bevorzugten Monomere B11 zur Herstellung der Pfropfgrundlage B1 sind Alkylacrylate und/oder Alkylmethacrylate mit 1 bis 8, bevorzugt 4 bis 8 Kohlenstoffatomen im Alkylrest. Insbesondere bevorzugt ist das Monomer B11 n-Butylacrylat und/oder 2-Ethylhexylacrylat, besonders bevorzugt n-Butylacrylat. Bevorzugt werden die genannten Alkylacrylate als einzige Monomere B11 eingesetzt.

Um eine Vernetzung der $C_1$-$C_8$-Alkyl(meth)acrylat-Monomere B11 und damit eine Vernetzung der Pfropfgrundlage B1 zu erhalten, wird die Polymerisation in Gegenwart von 0,1 bis 10 Gew.-%, bevorzugt 0,1 bis 5 Gew.-%, bevorzugt 0,5 bis 3 Gew.-%, bevorzugt 1 bis 4 Gew.-%, besonders bevorzugt 1 bis 2,5 Gew.-%, bezogen auf die Pfropfgrundlage B1, eines polyfunktionales, vernetzendes Monomer B12 durchgeführt. Bei dem Monomer B12 handelt es sich insbesondere um ein oder mehrere polyfunktionelle, die Vernetzung bewirkende Monomere, welche mit den anderen Monomeren, insbesondere B11 und B13, copolymerisiert werden können. Geeignete polyfunktionale, vernetzende Monomere B12 umfassen zwei oder mehr, bevorzugt zwei oder drei, insbesondere bevorzugt genau zwei, ethylenische Doppelbindungen, welche bevorzugt nicht 1,3-konjugiert sind. Beispiele für geeignete polyfunktionale, vernetzende Monomere B12 sind Allyl(meth)acrylat, Divinylbenzol und Diallylester von Dicarbonsäuren, wie beispielsweise Diallylmaleat, Diallylfumarat und Diallylphthalat.

Der Acrylsäurester von Tricylodecenylalkohol (Dihydrodicyclopentadienylacrylat, DCPA) wie in DE-A 1 260 135 beschrieben stellt ebenfalls ein bevorzugtes polyfunktionales, vernetzendes Monomer B12 dar.

Insbesondere ist das polyfunktionale, vernetzende Monomer B12 mindestens ein Monomer ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA), bevorzugt ausgewählt aus Allyl(meth)acrylat, Divinylbenzol, Diallylmaleat, Diallylfumarat, Diallylphthalat und Dihydrodicyclopentadienylacrylat (DCPA), insbesondere bevorzugt ausgewählt aus Allyl(meth)acrylat und Dihydrodicyclopentadienylacrylat (DCPA).

In einer bevorzugten Ausführungsform werden als Monomer B12 1 bis 2,5 Gew.-%, bevorzugt 1,5 bis 2,1 Gew.-%, bezogen auf die Pfropfgrundlage B1, Dihydrodicyclopentadienylacrylat (DCPA) allein oder in Mischung mit einem weiteren der oben genannten Monomere B12, insbesondere in Mischung mit Allyl(meth)acrylat, eingesetzt.

Darüber hinaus kann die Pfropfgrundlage B1 optional ein oder mehrere copolymerisierbare, monoethylenisch ungesättigte Monomere B13, unterschiedlich zu B11 und B12, enthalten. Beispielsweise können Monomere B13 ausgewählt aus Butadien, Isopren, Styrol, Acrylnitril, Methylmethacrylat und Vinylmethylether eingesetzt werden.

In einer bevorzugten Ausführungsform wird die mindestens eine Pfropfgrundlage B1 erhalten durch Emulsionspolymerisation von:

B11: 90 bis 99,9 Gew.-%, bevorzugt 97 bis 99,5 Gew.-%, bezogen auf die Pfropfgrundlage B1, mindestens eines $C_1$-$C_8$-Alkyl(meth)acrylats, bevorzugt n-Butylacrylat,

B12: 0,1 bis 10 Gew.-%, bevorzugt 0,5 bis 3 Gew.-%, besonders bevorzugt 1 bis 2,5 Gew.-%, bezogen auf die Pfropfgrundlage B1, mindestens eines polyfunktionalen, vernetzenden Monomers B12; ausgewählt aus Allyl(meth)acrylat, Divinylbenzol, Diallylmaleat, Diallylfumarat, Diallylphthalat und Dihydrodicyclopentadienylacrylat (DCPA), insbesondere bevorzugt Allyl(meth)acrylat und/oder Dihydrodicyclopentadienylacrylat (DCPA);

wobei die Summe B11 + B12 gerade 100 Gew.-% ergibt.

Die Pfropfgrundlage B1, bestehend aus den Monomeren B11, B12 und optional B13, sowie deren Herstellung ist bekannt und in der Literatur beschrieben, z.B. in DE-A 28 26 925, DE-A 31 49 358 und DE-A 34 14 118.

Die Pfropfcopolymerisation zur Herstellung der Pfropfhülle B2 (beispielsweise B2' und B2") kann zweckmäßig im gleichen System wie die Emulsionspolymerisation zur Herstellung der Pfropfgrundlage B1 vorgenommen werden, dabei können weitere Additive, wie Emulgator, Puffersubstanzen und Initiator, zugegeben werden. Die Monomere der Pfropfhülle, insbesondere die Monomere B21 und B22, können dem Reaktionsgemisch auf einmal, absatzweise in mehreren Stufen oder vorzugsweise kontinuierlich während der Polymerisation zugegeben werden. Durch die Zugabe der Monomere B21 und/oder B22 in mehreren Stufen erhält man typischerweise einen mehrschichtigen Aufbau der Pfropfhülle B2.

Geeignete Emulgatoren, Puffersubstanzen und Initiatoren werden in WO 2015/150223 und WO 2015/078751 beschrieben.

In einer bevorzugten Ausführungsform enthält das Pfropfcopolymer B (einstufige Pfropfhülle B2):

B1: 50 bis 70 Gew.-%, bevorzugt 55 bis 65 Gew.-%, besonders bevorzugt 58 bis 65 Gew.-%, bezogen auf das Pfropfcopolymer B, mindestens einer Pfropfgrundlage B1, wie oben beschrieben;

B2: 30 bis 50 Gew.-%, bevorzugt 35 bis 45 Gew.-%, besonders bevorzugt 35 bis 42 Gew.-%, bezogen auf das Pfropfcopolymer B, mindestens einer Pfropfhülle B2, welche erhalten wird durch Emulsionspolymerisation in Gegenwart der mindestens einen Pfropfgrundlage B1 von:

B21: 50 bis 95 Gew.-%, bevorzugt 65 bis 80 Gew.-%, besonders bevorzugt 70 bis 80 Gew.-%, bezogen auf die Pfropfhülle B2, eines Monomers B21, ausgewählt aus Styrol, α-Methylstyrol oder Mischungen von Styrol und mindestens einem weiteren Monomer ausgewählt aus α-Methylstyrol, p-Methylstyrol und $C_1$-$C_4$-Alkyl(meth)acrylat (z.B. Methylmethacrylat, Ethylmethacrylat), bevorzugt ausgewählt aus Styrol, α-Methylstyrol oder Mischungen von Styrol mit α-Methylstyrol oder Methylmethacrylat; und

B22: 5 bis 50 Gew.-%, bevorzugt 20 bis 35 Gew.-%, besonders bevorzugt 20 bis 30 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid), bevorzugt ausgewählt aus Acrylnitril oder Mischungen von Acrylnitril und Methacrylnitril;

wobei die Gesamtsumme aus Pfropfgrundlage B1 und Pfropfhülle B2 gerade 100 Gew.-% ergibt.

In einer bevorzugten Ausführungsform enthält das Pfropfcopolymers B (zweistufige Pfropfhülle aus B2' und B2"):

B1: 50 bis 70 Gew.-%, bevorzugt 60 bis 70 Gew.-%, bezogen auf das Pfropfcopolymer B, mindestens einer Pfropfgrundlage B1, wie oben beschrieben;

B2': 10 bis 30 Gew.-%, bevorzugt 10 bis 20 Gew.-%, besonders bevorzugt 10 bis 15 Gew.-%, bezogen auf das Pfropfcopolymer B, mindestens einer Pfropfhülle B2', welche erhalten wird durch Emulsionspolymerisation in Gegenwart der mindestens einen Pfropfgrundlage B1 von:
B21': 100 Gew.-%, bezogen auf die Pfropfhülle B2', eines Monomers B21', ausgewählt aus Styrol, α-Methylstyrol oder Mischungen von Styrol und mindestens einem weiteren Monomer ausgewählt aus α-Methylstyrol, p-Methylstyrol und $C_1$-$C_4$-Alkyl(meth)acrylat (z.B. Methylmethacrylat, Ethylmethacrylat); sowie

B2": 20 bis 40 Gew.-%, bevorzugt 20 bis 30 Gew.-%, besonders bevorzugt 25 bis 30 Gew.-%, bezogen auf das Pfropfcopolymer B, mindestens einer Pfropfhülle B2", welche erhalten wird durch Emulsionspolymerisation in Gegenwart der mit B2' gepfropften Pfropfgrundlage B1 von:

B21":50 bis 95 Gew.-%, bevorzugt 65 bis 80 Gew.-%, besonders bevorzugt 70 bis 80 Gew.-%, bezogen auf die Pfropfhülle B2", eines Monomers B21", ausgewählt aus Styrol, α-Methylstyrol oder Mischungen von Styrol und mindestens einem weiteren Monomer ausgewählt aus α-Methylstyrol, p-Methylstyrol und $C_1$-$C_4$-Alkyl(meth)acrylat (z.B. Methylmethacrylat, Ethylmethacrylat), bevorzugt ausgewählt aus Styrol, α-Methylstyrol oder Mischungen von Styrol mit α-Methylstyrol oder Methylmethacrylat; und

B22":5 bis 50 Gew.-%, bevorzugt 20 bis 35 Gew.-%, besonders bevorzugt 20 bis 30 Gew.-%, bezogen auf die

Pfropfhülle B2", eines Monomers B22", ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexylmaleimid und N-Phenylmaleimid).

Bevorzugt handelt es sich bei den Monomeren B21, B21' und B21" um Styrol oder Mischungen von Styrol und $\alpha$-Methylstyrol.

Bevorzugt handelt es sich bei den Monomeren B22 und B22" um Acrylnitril oder Mischungen von Acrylnitril und mindestens einem weiteren Monomer ausgewählt aus Methacrylnitril, Maleinsäureanhydrid, N-Cyclohexylmaleimid und N-Phenylmaleimid, besonders bevorzugt um Acrylnitril oder Mischungen von Acrylnitril und mindestens einem weiteren Monomer ausgewählt aus Methacrylnitril und Maleinsäureanhydrid.

In einer besonders bevorzugten Ausführungsform handelt sich bei dem Monomer B21, B21'und B21" um Styrol und bei dem Monomer B22 und B22' um Acrylnitril.

In einer bevorzugten Ausführungsform weist das Pfropfcopolymer B (erhalten als Pfropflatex) einen mittleren Partikeldurchmesser $d_{50}$ im Bereich von 50 bis 1.000 nm, bevorzugt 90 bis 700 nm auf. Der Partikeldurchmesser von Latexteilchen kann typischerweise durch bekannte geeignete Maßnahmen bei der Herstellung eingestellt werden. Dies ist unter anderem in DE-A 28 26 925 beschrieben.

Typischerweise kann der mittleren Teilchendurchmesser $d_{50}$ durch Ultrazentrifugenmessung (beispielsweise beschrieben in W. Scholtan, H. Lange, Kolloid-Z. u. Z. Polymere 250, S. 782 bis 796, 1972) oder mit Hilfe der Hydrodynamische Chromatografie HDC (beispielsweise beschrieben in W. Wohlleben, H. Schuch, "Measurement of Particle Size Distribution of Polymer Latexes", 2010, Editors: L. Gugliotta, J. Vega, p. 130 - 153) bestimmt werden. Der mittlere Teilchendurchmesser $d_{50}$ gibt den Wert der Verteilungskurve an, bei dem 50 Vol.-% der Partikel (z.B. des Polyacrylat-Latex) kleiner und die anderen 50 Vol.-% größer als der $d_{50}$ Durchmesser sind. Entsprechend gibt beispielsweise der $d_{90}$ Wert, den Teilchendurchmesser an, wobei 90-Vol% aller Teilchen einen kleineren Durchmesser aufweisen.

In einer bevorzugten Ausführungsform umfasst das erfindungsgemäße Verfahren die Herstellung von einem oder mindestens zwei verschiedenen Pfropfcopolymeren B-I und B-II, wobei sich die Pfropfcopolymeren B-I und B-II durch ihren mittleren Teilchendurchmesser $d_{50}$ unterscheiden.

Insbesondere enthält das Pfropfcopolymer B mindestens eines der Pfropfcopolymeren B-I und B-II, wobei

Pfropfcopolymer B-I einen mittleren Partikeldurchmesser $d_{50}$ im Bereich von 50 bis 180 nm, bevorzugt 80 bis 150 nm, besonders bevorzugt 90 bis 100 nm aufweist (kleinteiliger ASA-Kautschuk) und

Pfropfcopolymer B-II einen mittleren Partikeldurchmesser $d_{50}$ im Bereich von 200 bis 800 nm, bevorzugt 300 bis 700 nm, besonders bevorzugt 400 bis 600 nm aufweist (großteiliger ASA-Kautschuk).

Es ist erstrebenswert, wenn das Pfropfcopolymer B-II (großteiliger ASA-Kautschuk) eine enge Teilchengrößenverteilung aufweist, wobei es günstig ist, wenn der Quotient $Q = (d_{90}-d_{10}) / d_{50}$ kleiner als 0,3, vorzugsweise kleiner als 0,2 ist.

Als Pfropfgrundlage B1-II geeignete großteilige vernetzte $C_1$-$C_8$-Alkyl(meth)acrylatPolymere können nach den bekannten Verfahren zur Herstellung großteiliger Dispersionen erhalten werden, zweckmäßig jedoch nach der Saatlatex-Methode, wie sie in DE 1 911 882 für die Herstellung von ASA-Polymeren beschrieben ist. Nach dieser Methode wird typischerweise ein kleinteiliger vernetzter Acrylat-Latex (Saatlatex) mit einem mittleren Teilchendurchmesser $d_{50}$ im Bereich von 50 bis 180 nm, bevorzugt unter 120 nm, welcher durch Emulsionspolymerisation von $C_1$-$C_8$-Alkyl(meth)acrylaten, vernetzenden Monomeren sowie gegebenenfalls weiteren Co-Monomeren erhalten worden ist, durch Zugabe von weiteren Monomeren, Emulgator und gegebenenfalls Puffersubstanz einer weiteren Polymerisation unterworfen. Dabei werden die Bedingungen (vgl. Journal of Applied Polymer Science, Vol. 9 (1965), Seiten 2929 bis 2938) typischerweise so eingestellt, dass lediglich die vorhandenen Latexteilchen des Saatlatex weiter wachsen, aber keine neuen Latexteilchen gebildet werden. In der Regel wird ein Initiator eingesetzt. Die Teilchengröße des resultierenden Pfropfcopolymers B-II (großteiligen Kautschuk) lässt sich insbesondere durch Variation des Mengenverhältnisses von Saatlatex zu Monomeren in der gewünschten Weise einstellen.

Das Pfropfcopolymer B-II wird dann bevorzugt durch Emulsionspolymerisation von Styrol oder alpha-Methylstyrol, und Acrylnitril in Gegenwart der zuvor hergestellten großteiligen Pfropfgrundlage B1-II erhalten.

Die Pfropfcopolymere B-I und B-II können zudem bei der Herstellung der erfindungsgemäßen Formmasse in Kombination eingesetzt werden, insbesondere in Schritt d) (Vermischen der Komponenten). Das Gewichtsverhältnis der Pfropfcopolymere B-I und B-II kann in weiten Grenzen variiert werden. Bevorzugt stellt das Pfropfcopolymer eine Mischung der Pfropfcopolymere B-I und B-II dar, wobei das Gewichtsverhältnis Pfropfcopolymer B-I : Pfropfcopolymer B-II im Bereich von 90 : 10 bis 10 : 90, vorzugsweise 80 : 20 bis 20 : 80 und besonders bevorzugt 70 : 30 bis 35 : 65, liegt.

Bevorzugt werden die oben beschriebenen Pfropfcopolymere B-I und B-II getrennt hergestellt und aufgearbeitet

(d.h. die erfindungsgemäßen Schritte a) bis c) (Fällen der Pfropfcopolymere, Entwässern der wasserfeuchten Pfropfcopolymere, bevorzugt durch Filtration oder Zentrifugation und das Trocknen, bevorzugt unter Verwendung eines Fließbetttrockners und/oder eines Stromtrockners) und in Schritt d) mit dem thermoplastischen Copolymer A und optional weiteren Komponenten C und/oder K zu vermischen.

Es ist auch möglich die oben beschriebenen Pfropfcopolymere B-I und B-II nach der getrennten Herstellung zu mischen und gemeinsam zu fällen (Co-Fällung) (Schritt a)) und dann gemeinsam weiter aufzuarbeiten.

Es ist zudem möglich Pfropfcopolymere mit unterschiedlichen Partikelgrößen, insbesondere einer bimodalen Partikelgrößenverteilung von 50 bis 180 nm und von 200 bis 700 nm, durch ein bekanntes Agglomerationsverfahren zu erhalten. Pfropfcopolymere mit großteiligen und kleinteiligen Partikeln sind beispielsweise in DE-A 36 15 607, beschrieben.

Weiterhin bevorzugt können Pfropfcopolymere B verwendet werden, welche zwei oder mehreren verschiedenen Pfropfhüllen B2 umfassen. Pfropfcopolymere mit mehrstufigen Pfropfhüllen sind beispielsweise in EP-A 0 111 260 und WO 2015/078751 beschrieben.

Die bei der Emulsionspolymerisation des Pfropfcopolymers B eingesetzten Monomeren B21 und B22 sind vorzugsweise Mischungen aus Styrol und Acrylnitril im Gewichtsverhältnis 95 : 5 bis 50 : 50, besonders bevorzugt im Gewichtsverhältnis 80 : 20 bis 65 : 35.

Zusätzlich können bei der Herstellung der Pfropfgrundlage B1 und/oder bei der Emulsionspolymerisation des mindestens einen Pfropfcopolymers B Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die gesamte Monomer-Menge bei der Emulsionspolymerisation). Geeignete Molekulargewichtsregler sind beispielsweise Alkylmercaptane, wie n-Dodecylmercaptan, t-Dodecylmercaptan; dimeres $\alpha$-Methylstyrol und Terpinolen.

Als Initiatoren bei der Herstellung der Pfropfgrundlage B1 und/oder bei der Emulsionspolymerisation des mindestens einen Pfropfcopolymers B können beliebige Initiatoren eingesetzt werden. Bevorzugt wird mindestens eine organische und/oder anorganische Peroxid-Verbindung (umfassend mindestens eine Peroxidgruppe R-O-O-H und/oder R-O-O-R) als Initiator verwendet. Insbesondere werden anorganische Peroxid-Salze, wie Peroxodisulfate (Persulfate), Perphosphate und Perborate von Ammonium, Natrium oder Kalium, eingesetzt. Besonders bevorzugt sind Natrium- und Kaliumpersulfate.

In einer bevorzugten Ausführungsform wird bei der Emulsionspolymerisation des Pfropfcopolymers B ein anorganisches Peroxid-Salz, insbesondere ein anorganisches Peroxodisulfat-Salz, bevorzugt Natriumperoxodisulfat und/oder Kaliumperoxodisulfat, eingesetzt.

Als Emulgator bei der Herstellung der Pfropfgrundlage B1 und/oder bei der Emulsionspolymerisation zur Herstellung des mindestens einen Pfropfcopolymers B können typischerweise übliche anionische Emulgatoren eingesetzt werden. Bevorzugt werden als Emulgatoren Alkylsulfate, Alkylsulfonate, Arylalkylsulfonate, Seifen gesättigter oder ungesättigter Fettsäuren sowie alkalischer disproportionierter oder hydrierter Abietin- oder Tallölsäuren oder Mischungen hiervon verwendet. Vorzugsweise werden Emulgatoren mit Carboxylgruppen (z.B. Salze von $C_{10}$-$C_{18}$-Fettsäuren, disproportionierte Abietinsäure, Emulgatoren gemäß DE-OS 36 39 904 und DE-OS 39 13 509) eingesetzt.

Typischerweise werden bei der Herstellung des Propfcopolymers B geeignete Puffersubstanzen, z.B. Natriumcarbonat und Natriumhydrogencarbonat, eingesetzt. Geeignete Emulgatoren, Puffersubstanzen und Initiatoren sind zudem in WO 2015/150223 und WO 2015/078751 beschrieben.

Die Polymerisationstemperatur bei der Emulsionspolymerisation des Pfropfcopolymers B beträgt im Allgemeinen 25 bis 160 °C, vorzugsweise 40 bis 90 °C. Geeignete Emulgatoren sind oben angegeben. Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion höchstens 20 °C, vorzugsweise höchstens 15 °C, und besonders bevorzugt vorzugsweise höchstens 5 C beträgt.

Die Herstellung des Pfropfcopolymers B, insbesondere der Pfropfcopolymere B-I und B-II, erfolgt erfindungsgemäß mittels Emulsionspolymerisation. Dem Fachmann sind gängige Ausführungsformen der Emulsionspolymerisation im Batchbetrieb oder im kontinuierlichen Betrieb bekannt.

Insbesondere werden die Monomere der Pfropfhülle B2, d.h. die Monomere B21 und B22, separat oder als Monomer-Gemisch kontinuierlich zur Pfropfgrundlage B1, in den gegebenen Mengen und Verhältnissen zugegeben und polymerisiert. Dabei werden die Monomeren typischerweise in einer für den Fachmann bekannten Weise zur Pfropfgrundlage B1 gegeben.

Weitere polymere Komponente C

Außer den genannten Polymerkomponenten A und B können die thermoplastischen Formmassen kautschukfreie nicht aus Vinylmonomeren aufgebaute Thermoplastharze als weitere, polymeren Komponente C enthalten. Insbesondere handelt es sich bei diesen Thermoplastharze um Polykondensaten z.B. aromatischen Polycarbonate, aromatischen Polyestercarbonate, Polyester und Polyamide.

Geeignete thermoplastische Polycarbonate und Polyestercarbonate sind bekannt und beispielsweise in DE-A 14 95 626, DE-A 22 32 877, DE-A 27 03 376, DE-A 27 14 544, DE-A 30 00 610, DE-A 38 32 396, DE-A 30 77 934, sowie insbesondere in DE-A 100 08 420 und EP-A 2 606 073 beschrieben. Bevorzugt handelt es sich bei der weitere polymeren Komponente C um mindestens ein Polymer ausgewählt aus Polymethyl(meth)acrylat (PMA, PMMA), Polyamid und Polycarbonat.

In einer Ausführungsform handelt es sich bei der thermoplastischen Formmasse um einen ASA-Blend enthaltend 1 bis 90 Gew.-%, bevorzugt 10 bis 85 Gew.-%, besonders bevorzugt 20 bis 50 Gew.-%, insbesondere bevorzugt 1 bis 30 Gew.-%, bezogen auf die gesamte thermoplastische Formmasse, mindestens einer kautschukfreien nicht aus Vinylmonomeren aufgebauten weiteren polymeren Komponente C, bevorzugt ausgewählt aus Polycarbonaten, Polyestercarbonaten und Polyamiden. Bevorzugt handelt es sich bei der thermoplastischen Formmasse um einen PC/ASA-Blend enthaltend 1 bis 90 Gew.-%, bevorzugt 10 bis 85 Gew.-%, besonders bevorzugt 20 bis 50 Gew.-%, oftmals 10 bis 40 Gew.-%, bezogen auf die gesamte thermoplastische Formmasse, mindestens eines aromatischen Polycarbonats und/oder aromatischen Polyestercarbonats als weitere polymere Komponente C.

Insbesondere fallen unter den Begriff Polycarbonate, die Ester der Kohlensäure (Kondensationsprodukte von aromatischen Diphenolen mit Carbonsäurehaliden, insbesondere Phosgen) und aromatische Polyestercarbonate (Kondensationsprodukte von Diphenolen mit aromatischen Dicarbonsäurehaliden). Es können auch gemischte Kondensationsprodukte als aromatische Polyestercarbonate eingesetzt werden, wobei der Anteil an Carbonatgruppen bis zu 50 mol.-%, insbesondere bis zu 80 mol.-%, besonders bevorzugt bis zu 100 mol.-%, bezogen auf die Summe der Carbonatgruppen und der Estergruppen, betragen kann. Ester- und Carbonatgruppen können in dem Kondensationsprodukte in Form von Blöcken oder in statistischer Verteilung auftreten.

Bevorzugt werden halogenfreie aromatische Polycarbonate als Komponente C eingesetzt. Insbesondere bevorzugt werden halogenfreie aromatische Polycarbonate auf der Basis von Bisphenol A eingesetzt. Im Sinne der vorliegenden Erfindung ist ein halogenfreies Polycarbonat ein Polycarbonat, das aus halogenfreien Diphenolen, halogenfreien Kettenterminatoren und halogenfreien Vernetzungsmitteln aufgebaut ist. Polycarbonate, welche geringe Anteile, typischerweise im ppm Bereich, an hydrolisierbaren Chlorverbindungen enthalten, welche beispielsweise aus der Herstellung mit Phosgen resultieren, werden nicht als halogenhaltig Polycarbonate angesehen.

In einer bevorzugten Ausführungsform basiert das aromatische Polycarbonat als Komponente C auf einem Diphenol der Formel (II)

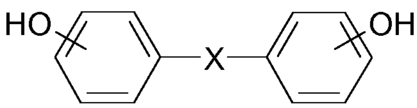

(II),

wobei X eine Einfachbindung, $C_1$-$C_3$-Alkylen, $C_2$-$C_3$-Alkyliden, $C_3$-$C_6$-Cycloalkyliden, -S- oder -$SO_2$- ist.

Beispiele für bevorzugte Diphenole der Formel (II) sind Hydrochinon, Resorcin, 4,4'-Dihydroxyphenol, 2,2-bis-(4-Hydroxyphenyl)propan, 2,4-bis(4-Hydroxyphenyl)-2-methylbutan, 1,1-Bis(4-Hydroxyphenyl)cyclohexan, 1,1-bis(4-Hydroxyphenyl)-3,3,5-trimethylcyclohexan. Besonders bevorzugt sind 2,2-bis(4-Hydroxyphenyl)propan und 1,1-bis(4-Hydroxyphenyl)cyclohexan. Die Diphenole können getrennt oder in beliebiger Mischung eingesetzt werden. Die Diphenole und deren Herstellung sind in der Literatur beschrieben. Die Verwendung von Polycarbonaten oder Polyestercarbonaten hergestellt aus 2,2-bis-(4-Hydroxyphenyl)-propan (Bisphenol A) ist insbesondere bevorzugt.

Bei der weiteren polymeren Komponente C kann es sich um Homopolycarbonate oder Copolycarbonate handeln, insbesondere um Homopolycarbonate oder Copolycarbonate von Bisphenol A handeln.

Geeignete Polycarbonate können eine Verzweigung aufweisen, welche in bekannter Weise erhalten wird durch Copolymerisation von etwa 0,05 bis 2,0 mol.-%, basierend auf der Stoffmenge an Diphenol, einer mindestens trifunktionalen Verbindung, insbesondere einer Verbindung, welche drei oder mehr phenolische OH-Gruppen aufweist.

Bevorzugte Polycarbonate weisen insbesondere eine relative Viskosität $\eta_{rel}$ im Bereich von 1,10 bis 1,50, bevorzugt 1,20 bis 1,40, auf. Bevorzugte Polycarbonate weisen insbesondere ein gewichtsmittleres Molekulargewicht $M_w$ im Bereich von 10.000 to 200.000 g/mol, bevorzugt 20.000 to 80.000 g/mol, und/oder Viskositätszahlen im Bereich von 20 bis 100 ml/g, bevorzugt 40 bis 80 ml/g, gemessen gemäß DIN 53727 in einer 0.5 Gew.-%igen Lösung in Methylenchlorid bei 23 °C.

Zudem können Polyorganosiloxan-Polycarbonate als weitere polymere Komponente C eingesetzt werden. Polyorganosiloxan-Polycarbonate sind beispielsweise in DE-A 33 34 782 beschrieben.

Verfahren zur Herstellung von Polycarbonaten sind dem Fachmann bekannt. Beispielsweise können Polycarbonate hergestellt werden durch Umsetzung von Diphenolen mit Phosgen in einem Grenzflächenprozess oder in einer homogenen Phase (so genanntes Pyridin-Verfahren). Die Herstellung mittels Schmelzpolymerization durch Reaktion von Diphenolen mit beispielsweise Diphenlycarbonat ist ebenso möglich. Typischerweise wird eine geeignete Menge

eines Kettenterminators eingesetzt um das gewünschte Molekulargewicht und die gewünschte Viskositätszahl zu erreichen. Beispiele für geeignete Kettenterminatoren sind Phenol, p-tert-Butylphenol und langkettige mono- oder di-Alkylphenole, wie 4-(1,3-tetramethylbutyl)phenol (z.B. beschrieben in DE-A 28 42 005), bevorzugt mit 8 bis 20 Kohlenstoffatomen in der Alkylkette (z.B. beschrieben in DE-A 35 06 472), wie p-Nonylphenol, 3,5-di-tert-Butylphenol, p-tert-Octylphenol, p-Dodecylphenol, 2-(3,5-Dimethylheptyl)phenol und 4-(3,5-Dimethylheptyl)phenol. Typischerweise wird der Kettenterminator in einer Menge von 0,5 bis 10 mol.-%, basierend auf der Stoffmenge des Diphenols, eingesetzt.

Geeignete aromatische Polycarbonate (Polycarbonate und Polyestercarbonate) und deren Herstellung sind dem Fachmann bekannt und unter anderem beschrieben in DE-A 3 077 934. Aromatische Polyestercarbonate werden typischerweise erhalten durch Umsetzung von Diphenolen mit einem aromatischen Dicarbonsäurehalid, bevorzugt ausgewählt aus Benzoldicarbonsäurehaliden, erhalten. Bevorzugt können als Dicarbonsäurehalide Disäurechloride von Isophthalsäure, Terephthalsäure, Diphenylether-4,4'-Dicarboxylsäure und Naphthalene-2,6-Dicarbonsäure eingesetzt werden. Mischungen aus den Disäurechloride von Isophthalsäure und Terephthalsäure, bevorzugt in einem Verhältnis von 1:20 und 20:1 sind insbesondere bevorzugt. Kohlensäurehalide, bevorzugt Phosgen, können zusätzlich als Co-Monomere bei der Herstellung von Polyestercarbonaten eingesetzt werden.

Die aromatischen Polyestercarbonate, die als Komponente C verwendet werden, können linear oder verzweigt sein (z.B. beschrieben in DE-A 2 940 024 und DE-A 3 007 934).

In einer bevorzugten Ausführungsform enthält die thermoplastische Formmasse 1 bis 90 Gew.-%, bevorzugt 10 bis 85 Gew.-%, insbesondere bevorzugt 10 bis 40 Gew.-%, mindestens eines aromatischen Polycarbonats als Komponente C, welches aufgebaut ist aus 2,2-bis-(4-Hydroxyphenyl)-propan (Bisphenol A) und Phosgen, wobei Polycarbonate hergestellt aus Vorstufen oder synthetische Aufbaublocks von Bisphenol A und Phosgen ebenso umfasst sind.

Weitere Komponenten K

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxid-Zerstörer, Antistatika, Gleitmittel, Entformungsmittel, Flammschutzmittel, Pigmente, Füll- oder Verstärkerstoffe (Glasfasern, Kohlefasern, etc.), Farbmittel.

Um die Pfropfcopolymere B während der Aufarbeitung vor thermischer Schädigung zu schützen, und um die Aufarbeitung sicher und gefahrlos durchführen zu können, ist es sinnvoll Antioxidantien, z.B. ein oder mehrere phenolische Antioxidantien, sowie beliebige andere Substanzen, die die thermische Beständigkeit der Pfropfcopolymere erhöhen, in Form einer oder mehreren Emulsionen oder Dispersionen den Pfropfcopolymeren B zuzusetzen und durch Rühren zu vermischen.

Als weitere Komponente K können zudem teilchenförmige mineralische Füllstoffe eingesetzt werden, wie beispielsweise amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin. Als weitere Komponente K können zudem faserförmige Füllstoffe wie Kohlenstofffasern, Kaliumtitanat-Whisker, Aramidfasern oder Glasfasern, eingesetzt werden.

Gängige Additive für ASA-Formmassen sind beispielsweise in WO 2015/150223 beschrieben.

Schritt a)

Der erfindungsgemäße Schritt a) umfasst das Fällen des mindestens einen Pfropfcopolymers B nach der Emulsionspolymerisation durch Zugabe einer Fällungslösung enthaltend mindestens ein Salz.

In einer bevorzugten Ausführungsform umfasst der erfindungsgemäße Schritt a), dass die oben beschriebenen Pfropfcopolymere B-I und B-II getrennt oder zusammen durch Zugabe der Fällungslösung enthaltend mindestens ein Salz gefällt werden. Hierbei werden die Pfropfcopolymere B-I und B-II in ihrer Latex-Form nach der Emulsionspolymerisation eingesetzt. Die gefällten Pfropfcopolymere B-I und B-II werden getrennt oder zusammen wie in den Schritten b) bis d) beschrieben weiter aufgearbeitet.

Als Fällungslösung zum Fällen des mindestens einen Pfropfcopolymers B nach der Emulsionspolymerisation können insbesondere wässrige Salzlösungen, beispielsweise wässrige Lösungen von Magnesiumsulfat, Kieserit, Pentahydrit, Hexahydrit, Epsomit (Bittersalz), Calciumchlorid, Natriumchlorid oder Mischungen hiervon eingesetzt werden. Bevorzugt ist es auch möglich Mischung von wässrigen Salzlösungen und Säuren (z.B. Schwefelsäure, Essigsäure) als Fällungslösung einzusetzen. Bevorzugte Salze sind hierbei Magnesiumsulfat, Kieserit ($Mg[SO_4] \cdot H_2O$), Pentahydrit ($Mg[SO_4] \cdot 5H_2O$), Hexahydrit ($Mg[SO_4] \cdot 6H_2O$), und Epsomit ($Mg[SO_4] \cdot 7H_2O$, Bittersalz), bevorzugte Säuren sind Schwefelsäure, Essigsäure und Mischungen hiervon. Besonders bevorzugt erfolgt das Fällen des mindestens einen Pfropfcopolymers B in Schritt a) durch Einwirkung einer wässrigen Salzlösung, wobei das Salz bevorzugt ausgewählt ist aus Magnesiumsulfat, Kieserit, Pentahydrit, Hexahydrit und Epsomit (Bittersalz).

Typischerweise weisen die Fällungslösungen eine Konzentration an Salz oder Salz und Säure im Bereich von

2 bis 20 Gew.-%, bezogen auf die Fällungslösung, auf. Das Fällen des mindestens einen Pfropfcopolymers B in Schritt a) kann einstufig oder mehrstufig unter Zugabe mehrerer Fällungslösungen erfolgen, wobei die Fällungslösungen gleich oder verschieden sein können.

Das Fällen des mindestens einen Pfropfcopolymers B kann bevorzugt durch kontinuierliche oder absatzweise Zugabe der Fällungslösung oder Zugabe des Pfropfcopolymer-Latex in die Fällungslösung durchgeführt werden. Im Falle der kontinuierlichen Zugabe findet die Fällung typischerweise in einem oder mehreren kontinuierlich betriebenen Rührbehältern, beispielsweise kontinuierlichen Rührkesseln, statt.

In einer besonders bevorzugten Ausführungsform werden eine wässrige Magnesiumsulfat-Lösung kontinuierlich in einer oder mehrerer Stufen zu dem Pfropfcopolymer B (Latex) dosiert.

Das Fällen kann in einem Temperaturbereich von 20 bis 150 °C; bevorzugt von 40 bis 120 °C, besonders bevorzugt von 50 bis 100 °C, durchgeführt werden.

Typischerweise kann die Mischung nach Zugabe der Fällungslösung in ein Sintergefäß unter Druck bei 100 bis 150 °C überführt werden.

Schritt b)

Der erfindungsgemäße Schritt b) umfasst das mechanische Entwässern des gefällten Pfropfcopolymers B, bevorzugt mittels Zentrifugation und/oder Filtration, wobei ein Pfropfcopolymer B mit einem Wassergehalt von kleiner oder gleich 50 Gew.-% erhalten wird.

Der Wassergehalt (oder auch als Restfeuchte bezeichnet) gibt typischerweise den Anteil an Wasser in Gewichtsprozent, bezogen auf das feuchte Pfropfcopolymer B, an. Insbesondere wird der Wassergehalt mit Hilfe geeigneter Analysegeräte (z.B. Trockenwaagen) bestimmt, wobei die Probe so lange getrocknet wird, bis eine Gewichtskonstanz der Probe über einen bestimmten Zeitraum erreicht ist. Beispielsweise kann der Wassergehalt des Pfropfcopolymers B in einem Halogen Moisture Analyzer HR73 von Mettler-Toledo, bei 180 °C bestimmt werden, bis eine Gewichtskonstanz für 30 Sekunden erreicht wird.

Bevorzugt erfolgt das mechanische Entwässern des gefällten Pfropfcopolymers B mittels Zentrifugation.

Bevorzugt wird in Schritt b) oder in einem nachgeschalteten Waschschritt wie unten beschrieben, ein Pfropfcopolymer B mit einem Wassergehalt im Bereich von 10 bis 50 Gew.-%, bevorzugt von 20 bis 40 Gew.-%, insbesondere bevorzugt von 25 bis 35 Gew.-% erhalten.

In einer weiteren Ausführungsform schließt sich nach dem mechanischen Entwässern des Pfropfcopolymers B ein Waschschritt an, wobei das entwässerte Pfropfcopolymer B vorzugsweise mit Wasser oder einer Mischung aus Wasser und einem polaren, mit Wasser mischbaren organischen Lösungsmittel behandelt wird. Bevorzugt wird das Wasser oder die Mischung nach der Behandlung durch Filtration und/oder Zentrifugation abgetrennt. Bevorzugt entsteht dabei ein Pfropfcopolymer B mit einem Wassergehalt von kleiner oder gleich 50 Gew.-%.

Schritt c)

Der erfindungsgemäße Schritt c) umfasst das Trocknen des entwässerten Pfropfcopolymers B mit einem Wassergehalt von kleiner oder gleich 50 Gew.-% unter Verwendung eines Trocknungsgases, wobei das Pfropfcopolymer B in dem Trocknungsgas bewegt wird und das Trocknungsgas eine Temperatur im Bereich von 50 bis 160 °C, bevorzugt von 55 bis 155 °C, besonders bevorzugt von 60 bis 150 °C, aufweist.

Insbesondere wird das Pfropfcopolymer B zusammen mit dem strömenden Trocknungsgas bewegt, insbesondere wird das Pfropfcopolymer B von dem strömenden Trocknungsgas mitgerissen.

Bevorzugt wird als Trocknungsgas Luft, Stickstoff oder beliebige Mischungen hiervon verwendet.

In einer bevorzugten Ausführungsform erfolgt das Trocknen des entwässerten Pfropfcopolymers B in Schritt c) unter Verwendung eines Fließbetttrockners (Wirbelschichttrockner) und/oder einem Stromtrockners (Flashtrockner). Bevorzugt erfolgt das Trocknen unter Verwendung eines Fließbetttrockners oder unter Verwendung einer Kombination eines Fließbetttrockners und eines Stromtrockners. Insbesondere kann der Fließbetttrockner einen oder mehrere Wärmetauscher aufweisen.

Fließbetttrockner (Wirbelschichttrockner) und Stromtrockner (Flashtrockner) sind dem Fachmann bekannt. Insbesondere handelt es sich um Trocknungsvorrichtungen für partikelförmige, rieselfähige Materialien, wie sie in Krischer/Kröll, Trocknungstechnik, Zweiter Band, Trockner und Trocknungsverfahren (Springer-Verlag, 1959) beschrieben werden. Fließbetttrockner, auch Wirbelschichttrockner genannt, werden zum Beispiel in dem oben genannten Dokument auf den Seiten 275 bis 282 beschrieben. Stromtrockner oder auch Flashtrockner genannten werden in dem oben genannten Dokument beispielsweise auf den Seiten 282 folgende beschrieben.

Typischerweise wird in Fließbetttrocknern das zu trocknende Material (d.h. das entwässerte Pfropfcopolymer B mit einem Wassergehalt von kleiner oder gleich 50 Gew.-%) von unten (d.h. entgegen der Richtung der Schwerkraft) durch ein Gas, insbesondere Warmluft oder heiße Gase, bevorzugt ein Trocknungsgas ausgewählt aus Luft und/oder

Stickstoff mit einer Temperatur im Bereich von 50 bis 160 °C, durchströmt und angehoben, aber nicht mitgetragen. Hierbei entsteht in der Regel eine Schicht, in der sich die Partikel des zu trocknenden Materials ständig aufwärts und abwärts bewegen und die wie eine brodelnde Flüssigkeit erscheinen kann.

Man spricht oftmals von einem Fließbett, auch Schwebebett oder Wirbelbett. Typischerweise müssen die Strömungsbedingungen des jeweiligen Systems so eingestellt werden, dass die gewünschte Wirbelschicht entsteht. In der Regel umfassen Fließbetttrockner eine Schwebekammer, in der das zu trocknende Material beispielsweise auf einem Siebboden liegt, durch den das Trocknungsgas von unten durch das Material strömt, mindestens eine Eingabevorrichtung für das zu trocknende (feuchte) Material und mindestens eine Abscheide- und Entnahmevorrichtung (Abscheider) für das getrocknete Material.

Insbesondere beträgt die mittlere Verweilzeit des Pfropfcopolymers B im Fließbetttrockner 1 bis 60 min, bevorzugt 5 bis 50 min, besonders bevorzugt 10 bis 40 min.

In einer bevorzugten Ausführungsform erfolgt das Trocknen des entwässerten Pfropfcopolymers B in Schritt c) unter Verwendung eines Fließbetttrockners, welcher einen oder mehrere in das Fließbett integrierte Wärmetauscher aufweist. Durch den Einsatz von Wärmetauschern kann insbesondere - zusätzlich zu der Trocknungsenergie des heißen Trocknungsgases - Trocknungsenergie in das Fließbett eingebracht werden. Gängige Ausführungsformen von Wärmetauschern, wie beispielsweise Platten-, Rippenrohr-, Rohr-, und Spiral-Wärmetauscher, sind dem Fachmann bekannt und in Standardwerken beschrieben. Beispielsweise können Fließbetttrockner eingesetzt werden, die in D. Gehrmann, et al., Trocknungstechnik in der Lebensmittelindustrie (Behr's Verlag GmbH & Co.KG, 1. Auflage 2009, Abschnitt 2.5.3 Statische Wirbelschichttrockner, Seite 143-145) beschrieben sind. Die Wärmetauscher werden bevorzugt mit Temperaturen im Bereich von 50 bis 100 °C, bevorzugt 55 bis 90 °C, besonders bevorzugt 60 bis 85 °C betrieben. Insbesondere beträgt die Einlauftemperatur des Wärmeaustauschmediums (beispielsweise Wasser) 50 bis 100 °C, bevorzugt 55 bis 90 °C, besonders bevorzugt 60 bis 85 °C.

Typischerweise wird in Stromtrocknern das zu trocknende Material (d.h. das entwässerte Pfropfcopolymer B mit einem Wassergehalt von kleiner oder gleich 50 Gew.-%) durch strömende Gase, insbesondere Warmluft oder heiße Gase, bevorzugt durch ein Trocknungsgas ausgewählt aus Luft und/oder Stickstoff mit einer Temperatur im Bereich von 50 bis 160 °C, mitgerissen und dabei getrocknet. Hierbei überträgt das strömende Gas als Trocknungsgas Energie auf das zu trocknende Material und führt den entstehenden Wasserdampf ab. Typischerweise sind Stromtrockner als horizontales oder vertikales Rohr ausgebildet, wobei typischerweise mindestens eine Eingabevorrichtung für das zu trocknende (feuchte) Material und mindestens eine Abscheide- und Entnahmevorrichtung (Abscheider) für das getrocknete Material umfasst sind.

Die mittlere Verweilzeit des Pfropfcopolymers B im Stromtrockner beträgt typischerweise 1 bis 300 Sekunden, bevorzugt 1 bis 120 Sekunden, besonders bevorzugt 5 bis 60 Sekunden.

In Schritt c) können ein oder mehrere Fließbetttrockner (Wirbelschichttrockner) und/oder ein oder mehrere Stromtrockner absatzweise oder kontinuierlich betrieben werden.

Die maximal Produkttemperatur im Trocknungsschritt c), d.h. die Temperatur des mindestens einen Pfropfcopolymers B (Fließbetttemperatur), die maximale während des Trocknungsschritts c) erreicht wird, beträgt insbesondere kleiner 100 °C, vorzugsweise kleiner 95 °C und ganz bevorzugt kleiner 90 °C. Typischerweise steigt die Produkttemperatur im Laufe des Trocknungsschritts an. Bevorzugt liegt die mittlere Produkttemperatur während des Trocknungsschritts c) im Bereich von 30 bis 100 °C, bevorzugt 40 bis 95 °C. In einer bevorzugten Ausführungsform liegt die Produkttemperatur bei Trocknung in einem Batchverfahren zu Anfang im Bereich von 30 bis 100 °C, bevorzugt 30 bis 60 °C, insbesondere bevorzugt 35 bis 50 °C; und zu Ende der Trocknung im Bereich von 50 bis 100 °C, bevorzugt 70 bis 95 °C. In einer bevorzugten Ausführungsform liegt die Produkttemperatur bei Trocknung in einem kontinuierlichen Verfahren in einer ersten Zone des Trockners im Bereich von 30 bis 100 °C, bevorzugt 30 bis 60 °C, insbesondere bevorzugt 35 bis 50 °C und in der letzten Zone des Trockners im Bereich von 50 bis 100 °C, bevorzugt 70 bis 100 °C.

In einer bevorzugten Ausführungsform umfasst Schritt c) das Abkühlen des getrockneten Pfropfcopolymers B nach der Trocknung auf eine Temperatur von 30 bis 50 °C, bevorzugt durch einen Kühlgas-Strom. Beispielsweise kann das getrocknete Pfropfcopolymer B am Kopf des Fließbetttrockners durch einen Kühlgas-Strom, beispielsweise Luft, abgekühlt werden. Die Temperatur des Kühlgas-Stroms beträgt beispielsweise 10 bis 40 °C, bevorzugt 15 bis 25 °C..

Die mittlere Verweilzeit des Pfropfcopolymers B im Fließbetttrockner und/oder Stromtrockner beträgt typischerweise 1 Sekunde bis 60 min, bevorzugt 5 Sekunden bis 40 min. Grundsätzlich ist es vorteilhaft beim Stromtrockner kürzere Verweilzeiten und höhere Temperaturen einzustellen im Vergleich zum Fließbetttrockner.

Durch den erfindungsgemäßen Trocknungsschritt ist es insbesondere möglich eine besonders schnelle und gleichmäßige Trocknung zu erreichen, was insbesondere zu kleinen Salzeinlagerungen, beispielsweise in Form von Salzkristallen, führt, welche wenige mit bloßem Auge sichtbare Oberflächenstörungen hervorrufen.

Der erfindungsgemäße Trocknungsschritt sollte daher insbesondere einen schnellen und effektiven Wärmeübergang zwischen dem Trocknungsgas und dem zu trocknenden Pfropfcopolymer B gewährleisten, wobei aber andererseits hohe Tempertaturen des zu trocknenden Pfropfcopolymer B selbst vermieden werden.

Bevorzugt wird das Trocknen in Schritt c) mittels eines Trocknungsgases ausgewählt aus Luft und/oder Stickstoff

durchgeführt,

wobei das Trocknen unter Verwendung eines Fließbetttrockners durchgeführt wird und das Trocknungsgas eine Temperatur im Bereich von 50 bis 160 °C, bevorzugt 55 bis 140 °C, besonders bevorzugt 60 bis 120 °C, aufweist;

oder wobei das Trocknen unter Verwendung eines Stromtrockners durchgeführt wird und das Trocknungsgas eine Temperatur im Bereich von 100 bis 160 °C, bevorzugt 110 bis 155 °C, besonders bevorzugt 130 bis 150 °C, aufweist.

Weiterhin bevorzugt wird das Trocknen in Schritt c) mittels eines Trocknungsgases ausgewählt aus Luft und/oder Stickstoff durchgeführt,
wobei das Trocknen unter Verwendung eines Fließbetttrockners, welcher mindestens einen in das Fließbett integrierten Wärmetauscher aufweist, durchgeführt wird; wobei das Trocknungsgas eine Temperatur im Bereich von 50 bis 160 °C, bevorzugt 55 bis 140 °C, besonders bevorzugt 60 bis 120 °C, aufweist, und wobei der mindestens eine Wärmetauscher mit einer Temperaturen im Bereich von 55 bis 165 °C, bevorzugt 60 bis 145 °C, besonders bevorzugt 65 bis 125 °C betrieben wird.

Insbesondere bevorzugt wird das Trocknen in Schritt c) mittels eines Trocknungsgases ausgewählt aus Luft und/oder Stickstoff durchgeführt,

wobei das Trocknen unter Verwendung eines Fließbetttrockners, bevorzugt eines Fließbetttrockners, welcher mindestens einen ins Fließbett integrierten Wärmetauscher aufweist, durchgeführt wird, das Trocknungsgas eine Temperatur im Bereich von 50 bis 160 °C, bevorzugt 50 bis 120 °C, aufweist und die mittlere Verweilzeit des Pfropfcopolymers B im Fließbetttrockner 1 bis 60 min, bevorzugt 5 bis 50 min, besonders bevorzugt 10 bis 40 min beträgt; oder wobei das Trocknen unter Verwendung eines Stromtrockners durchgeführt wird, das Trocknungsgas eine Temperatur im Bereich von 100 bis 160 °C aufweist und die mittlere Verweilzeit des Pfropfcopolymers B im Stromtrockner 1 bis 300 Sekunden, bevorzugt 1 bis 120 Sekunden, besonders bevorzugt 5 bis 60 Sekunden beträgt.

In einer bevorzugten Ausführungsform der Erfindung wird die oben beschriebene Trocknung für weitere 10 bis 30 min, bevorzugt 15 bis 20 min fortgeführt, ab dem Zeitpunkt, an dem ein Wassergehalt von 10 Gew.-%, bevorzugt von 7,5 Gew.-%, insbesondere bevorzugt von 5 Gew.-% (oder kleiner), erreicht wird.

In einer bevorzugten Ausführungsform der Erfindung wird die oben beschriebene Trocknung für weitere 5 bis 30 min, bevorzugt 5 bis 15 min fortgeführt, ab dem Zeitpunkt, an dem ein Wassergehalt von 2 Gew.-%, bevorzugt von 1 Gew.-%, insbesondere bevorzugt von 0,5 Gew.-% (oder kleiner), erreicht wird.

In einer bevorzugten Ausführungsform weist das getrocknete Pfropfcopolymer B einen Wassergehalt im Bereich von 0,01 bis 1 Gew.-%, bevorzugt 0,1 bis 0,8 Gew.-%, insbesondere bevorzugt 0,1 bis 0,5 Gew.-%, besonderes bevorzugt 0,2 bis 0,4 Gew.-%, auf.

Durch den erfindungsgemäßen Trocknungsschritt ist es insbesondere möglich den Gesamtgehalt an Restmonomeren im Pfropfcopolymer B auf einen Wert kleiner 200 ppm, bevorzugt kleiner 100 ppm, jeweils bezogen auf das trockene Pfropfcopolymer B (bezogen auf den Feststoffgehalt des Pfropflatex), zu vermindern. Bevorzugt wird der Gehalt an Styrol im Propfcopolymer B auf einen Wert kleiner 30 ppm, insbesondere kleiner 10 ppm vermindert, jeweils bezogen auf das trockene Pfropfcopolymer B. Bevorzugt wird der Gehalt an Acrylnitril im Pfropfcopolymer B auf einen Wert kleiner 10 ppm, insbesondere kleiner 5 ppm, jeweils bezogen auf das trockene Pfropfcopolymer B, vermindert.

Der Ausdruck "ppm" bedeutet im Sinne der vorliegenden Anmeldung "mg/kg".

Unter Restmonomeren sind nicht umgesetzte Monomere und deren Umwandlungsprodukte zu verstehen. Insbesondere umfasst der Gesamtgehalt an Restmonomeren den Gehalt an Styrol, Acrylnitril, Butylacrylat und Ethylbenzol, bevorzugt den Gehalt an Acrylnitril, Styrol und Ethylbenzol, im Polymer.

In einer bevorzugten Ausführungsform weist das getrocknete Pfropfcopolymer B einen Wassergehalt im Bereich von 0,05 bis 0,6 Gew.-%, insbesondere bevorzugt 0,1 bis 0,5 Gew.-%, besonderes bevorzugt 0,1 bis 0,4 Gew.-%, und einen Gesamtgehalt an Restmonomeren von kleiner 200 ppm, bevorzugt von kleiner 100 ppm, insbesondere im Bereich von 10 bis 200 ppm, bevorzugt von 15 bis 100 ppm, jeweils bezogen auf das trockene Pfropfcopolymer B, auf.

Schritt d)

Der erfindungsgemäße Schritt d) umfasst das Vermischen des thermoplastischen Copolymers A, des getrockneten Pfropfcopolymers B aus Schritt c), optional der weiteren polymeren Komponente(n) (C) und optional der weiteren Komponente(n) K.

Bevorzugt umfasst Schritt d) das Vermischen des thermoplastischen Copolymers A, des gefällten und getrockneten Pfropfcopolymers B-I und/oder B-II, optional der weiteren polymeren Komponente C, und optional der mindestens einen weiteren Komponente K, bevorzugt ausgewählt aus Füllstoffen, Additiven und Hilfsmitteln. Bevorzugt erfolgt dieses

Vermischen in einem Extruder.

Die Verfahren und Vorrichtungen zur Durchführung des Schritts d) sind dem Fachmann im Wesentlichen bekannt. Typischerweise umfasst Schritt d) das Schmelzecompoundieren und/oder das Schmelzextrudieren und wird bevorzugt in Innenknetern, Extrudern und/oder Doppelwellenschnecken durchgeführt.

Bevorzugt erfolgt das Vermischen in Schritt d) bei Temperaturen von 200 bis 300 °C.

Das Vermischen des thermoplastischen Copolymers A, des mindestens einen getrockneten Pfropfcopolymers B aus Schritt c) und optional weiteren Komponenten K kann in bekannter Weise sowohl sukzessive als auch simultan erfolgen. Es ist zudem möglich, dass zunächst einige Komponenten bei Temperaturen von 15 bis 40 °C, insbesondere bei Raumtemperatur (etwa 20 °C) vermischt werden und später die Temperatur auf 200 bis 300 °C, optional unter Zugabe weiterer Komponenten, erhöht wird.

Gegenstand der Erfindung ist zudem die Verwendung eines Fließbetttrockners (Wirbelschicht-Trockner), bevorzugt eines Fließbetttrockners, welcher einen oder mehrere ins Fließbett integrierte Wärmetauscher aufweist, und/oder eines Stromtrockners (Flashtrockner) bei der Herstellung einer thermoplastischen Formmasse wie oben beschrieben zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verbesserung der Oberflächenqualität der thermoplastischen Formmasse enthaltend das Pfropfcopolymer B. Insbesondere handelt es sich um eine thermoplastische ASA-Formmasse.

Die oben beschriebenen Ausführungsformen, insbesondere die Ausführungsformen betreffend die thermoplastische Formmasse und deren Komponenten sowie die Verfahrensschritte a) bis d), gelten in entsprechender Weise für die erfindungsgemäße Verwendung.

In einer bevorzugten Ausführungsform betrifft die Erfindung die Verwendung wie oben beschrieben, wobei das Trocknen des Pfropfcopolymers B in einem Fließbetttrockner und/oder einem Stromtrockner mittels eines Trocknungsgases ausgewählt aus Luft und/oder Stickstoff durchgeführt wird, und das Trocknungsgas eine Temperatur im Bereich von 50 bis 160 °C, bevorzugt von 55 bis 155 °C, besonders bevorzugt von 60 bis 150 °C, aufweist.

Insbesondere betrifft die vorliegende Erfindung die Verwendung wie oben beschrieben, wobei die Verbesserung der Oberflächenqualität der thermoplastischen Formmasse eine Erhöhung der Oberflächenhomogenität der thermoplastischen Formmasse bzw. des daraus hergestellten Formteils umfasst. Erhöhung der Oberflächenhomogenität meint insbesondere die Erhöhung von Glanz und Glätte der Oberfläche und/oder die Verminderung von Oberflächenstörungen. Als Oberflächenstörungen (beispielsweise bedingt durch Salzeinlagerungen) können insbesondere Flecken, Risse und Vertiefungen (Kavitäten) genannt werden.

Insbesondere betrifft die vorliegende Erfindung die Verwendung wie oben beschrieben, wobei die Verbesserung der Oberflächenqualität der thermoplastischen Formmasse eine Verminderung der Oberflächenstörungen nach einer Lagerung der Formmasse unter feucht-warmen Umgebungsbedingungen umfasst.

Feucht-warme Umgebungsbedingungen meint insbesondere Bedingungen die eine Temperatur und eine Luftfeuchte umfassen, welche über den üblichen Werten von 15 bis 20 °C und einer relativen Luftfeuchte von 30 bis 60 % liegen. Zudem können feucht-warme Umgebungsbedingungen insbesondere den direkten Kontakt der Oberfläche mit flüssigem Wasser (z.B. in Form von Nassdampf (Dampfschwaden, Nebel) und/oder Kondenswasser) umfassen. Insbesondere umfasst der Ausdruck feucht-warme Umgebungsbedingungen im Sinne der Erfindung eine Temperatur im Bereich von 25 bis 100 °C, bevorzugt 40 bis 90 °C, besonders bevorzugt 50 bis 80 °C und eine relative Luftfeuchtigkeit im Bereich von 65 bis 100 %, bevorzugt 80 bis 100 % und/oder die direkte Einwirkung von flüssigem Wasser bei einer Temperatur im Bereich von 30 bis 100 °C, bevorzugt 40 bis 90 °C, besonders bevorzugt 50 bis 80 °C, auf die Oberfläche der Formmasse bzw. des daraus hergestellten Formteils. Typischerweise beziehen sich die angegebenen Bedingungen auf Normaldruck von 1,013 bar, typischerweise auf einen Bereich von 0,9 bis 1,1 bar.

Üblicherweise gibt die relative Luftfeuchtigkeit $f_R$ das prozentuale Verhältnis der absoluten Luftfeuchte f (Masse des Wasserdampfs in einem bestimmten Volumen, z.B. in $g/m^3$) zu der maximalen Luftfeuchte $f_{max}$, bei einer gegebener Temperatur an. Die maximale Luftfeuchte $f_{max}$ beschreibt die maximal mögliche Masse an Wasserdampf in einem bestimmten Luftvolumen bei einer gegebenen Temperatur (Sättigung). Die relative Luftfeuchtigkeit kann nach der folgenden Formel bestimmt werden

$$f_R = (f/f_{max})*100\ \%$$

und nimmt somit Werte zwischen 0 und 100 % an. Bei einer relativen Luftfeuchtigkeit über 100 % kommt es daher in der Regel zu einer Kondensation von Wasserdampf, beispielsweise in Form von Nebel.

In diesem Sinne bezieht sich die Erfindung bevorzugt auf die oben beschriebene Verwendung eines Fließbetttrockners, bevorzugt eines Fließbetttrockners mit einem oder mehreren in das Fließbett integrierten Wärmetauschern, und/oder eines Stromtrockners bei der Herstellung einer thermoplastischen Formmasse zur Verbesserung der Oberflächenqualität, wobei die Verbesserung der Oberflächenqualität eine Verminderung der Oberflächenstörungen nach einer Lagerung der Formmasse bzw. der daraus hergestellten Formteile bei einer Temperatur im Bereich von 30 bis 100 °C und einer relativen Luftfeuchtigkeit im Bereich von 65 bis 100 % und/oder der direkten Einwirkung von flüssigem Wasser bei einer Temperatur im Bereich von 30 bis 100 °C auf die Oberfläche der Formmasse (feucht-warme Umgebungsbedingungen), umfasst.

Verbesserung der Oberflächenqualität im Sinne der Erfindung meint insbesondere, dass nach einer Lagerung von mindestens einer Stunde, bevorzugt nach einer Lagerung über einen Zeitraum von 2 bis 48 h, bevorzugt von 5 bis 24 h, unter feucht-warmen Umgebungsbedingungen wie oben beschrieben wenige oder keine Oberflächenstörungen, insbesondere Flecken und/oder Vertiefungen bedingt durch Salzeinlagerungen, mit bloßem Auge zu beobachten sind. Insbesondere meint Verbesserung der Oberflächenqualität, dass nach einer Lagerung unter feucht-warmen Bedingungen auf einer Fläche von 150 $cm^2$ weniger als 15, bevorzugt weniger als 10, besonders bevorzugt weniger als 6, Oberflächenstörungen, insbesondere Flecken und/oder Vertiefungen, mit bloßem Auge zu beobachten sind.

In einer bevorzugten Ausführungsform umfasst die Verbesserung der Oberflächenqualität der thermoplastischen Formmasse die Vermeidung oder Verhinderung von Salzeinlagerungen mit einer Größe von mehr als 0,3 mm, bevorzugt von mehr als 0,2 mmm und insbesondere bevorzugt von mehr als 0,1 mm. Insbesondere kann durch die erfindungsgemäße Verwendung die Bildung von großen Salzeinlagerungen, welche mit dem bloßen menschlichen Auge sichtbar sind, in den thermoplastischen Formmassen bzw. den daraus hergestellten Formteilen, vermieden oder vermindert werden, insbesondere in dem oben beschriebenen Ausmaß.

Als Salzeinlagerungen, die mit dem bloßen menschlichen Auge nicht sichtbar sind, werden solche verstanden, die hinsichtlich Größe und Dichte gemäß DIN EN ISO 4628-2 zu einer Bewertung von "1 S1" führen. Oberflächen ohne Salzeinlagerungen, welche mit dem bloßen menschlichen Auge sichtbar sind, werden typischerweise gemäß DIN EN ISO 4628-2 mit der Bewertung "0" bewertet.

Bevorzugt umfasst die Verbesserung der Oberflächenqualität, dass in der Oberfläche der thermoplastischen Formmasse bzw. in den daraus hergestellten Formteilen mindestens 80 %, bevorzugt mindestens 90 %, insbesondere mindestens 99 %, bezogen auf die gesamte Anzahl Salzeinlagerungen, der Salzeinlagerungen eine Größe kleiner 0,3 mm, bevorzugt kleiner als 0,2 mm, insbesondere bevorzugt kleiner als 0,1 mm, ganz besonders bevorzugt kleiner 0,01 mm aufweisen. Bevorzugt kann als Größe der Durchmesser der Salzeinlagerung bestimmt werden. Bevorzugt umfasst die Verbesserung der Oberflächenqualität der thermoplastischen Formmasse die Vermeidung oder Verhinderung von Salzeinlagerungen wie oben beschrieben nach einer Lagerung unter feucht-warmen Bedingungen wie oben definiert.

Bevorzugt enthalten die Salzeinlagerungen Salze (oder bestehen im Wesentlichen daraus), welche herstellungsbedingt in der Formmasse enthalten sind, insbesondere Salze, welche zur Fällung des mindestens einen Pfropfcopolymers B eingesetzt werden. Bevorzugt enthalten die Salzeinlagerungen somit Salze der oben genannten Fällungsmittel, beispielsweise Magnesiumsulfat, Kieserit, Pentahydrit, Hexahydrit, Epsomit, Calciumchlorid, Natriumchlorid oder Mischungen hiervon. Zudem können in den Einlagerungen auch Salze abgeleitet von den eingesetzten Säuren, beispielsweise Sulfate, Acetate und Chloride, enthalten sein.

Weiterhin können die Salzeinlagerungen auch Salze abgeleitet von anderen bei der Herstellung verwendeten Additiven, z.B. Emulgatoren, enthalten. Bevorzugt enthalten die Salzeinlagerungen Magnesiumsulfat.

Insbesondere bevorzugt enthalten die Salzeinlagerungen Magnesiumsulfat als wesentlichen Bestandteil, beispielsweise zu mehr als 80 Gew.-%, bezogen auf das Gewicht der Salzeinlagerungen.

Gegenstand der Erfindung ist zudem die Verwendung eines Fließbetttrockners (Wirbelschicht-Trockner), bevorzugt eines Fließbetttrockners, welcher einen oder mehrere ins Fließbett integrierte Wärmetauscher aufweist, und/oder eines Stromtrockners (Flashtrockner) bei der Herstellung einer thermoplastischen Formmasse, wie oben beschrieben, zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verminderung des Gesamtgehaltes an Restmonomeren, bevorzugt auf einen Wert unter 200 ppm, insbesondere unter 100 ppm, bezogen auf das trockene Pfropfcopolymer B. Bevorzugt betrifft die Verwendung die Trocknung des Pfropfcopolymers B auf einen Wassergehalt unter 1 Gew.-%, bevorzugt unter 0,8 Gew.-%.

Gegenstand der Erfindung sind auch thermoplastische Formmassen erhältlich durch das erfindungsgemäße Verfahren, sowie die daraus hergestellten Formteile.

Die Erfindung betrifft eine thermoplastische Formmasse erhältlich durch das erfindungsgemäße Verfahren, wobei die thermoplastische Formmasse Salzeinlagerungen enthält und wobei mindestens 80 %, bevorzugt mindestens 90 %, insbesondere mindestens 99 % (bezogen auf die gesamte Anzahl der Salzeinlagerungen), der Salzeinlagerungen eine Größe kleiner 0,3 mm, bevorzugt kleiner als 0,2 mm, insbesondere bevorzugt kleiner als 0,1 mm, ganz besonders bevorzugt kleiner 0,01 mm aufweisen. Bevorzugt wird als Größe der Durchmesser der Salzeinlagerung angegeben oder die Länge einer anderen charakteristischen Dimension der Salzeinlagerung.

Die Zusammensetzung der erfindungsgemäßen thermoplastischen Formmasse ist oben im Zusammenhang mit dem erfindungsgemäßen Verfahren beschrieben.

Die erfindungsgemäßen Formmassen können zur Herstellung von Formteilen jeder Art verwendet werden.

Diese können durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung. Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Automobilaußen- und -Innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise zur Herstellung von folgenden Formteilen verwendet werden: Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badausrüstungen, Abdeckgitter für Lüfter-Öffnungen, Formteile für Garten- und Gerätehäuser, Gehäuse für Gartengeräte.

Die oben beschriebenen Ausführungsformen betreffend die thermoplastische Formmasse, insbesondere das thermoplastische Copolymer A und das Pfropfcopolymer B, und betreffend die Verfahrensschritte a) bis d) gelten in entsprechender Weise für die erfindungsgemäße Formmasse und daraus hergestellter Formteile.

Figur 1 beschreibt den Gehalt an Styrol (S) in ppm (Quadrate ■) und die Restfeuchte (RF) (Raute ♦) im Pfropfcopolymer B-I gemäß Beispiel 1 in Abhängigkeit der Trocknungsdauer (t [min]).

Figur 2 beschreibt den Gehalt an Styrol (S) in ppm (Quadrate ■) und die Restfeuchte (RF) (Raute ♦) im Pfropfcopolymer B-II gemäß Beispiel 1 in Abhängigkeit der Trocknungsdauer (t [min]).

Die Erfindung wird durch die nachfolgenden Beispiele und Ansprüche weiter erläutert.

Beispiele

Beispiel 1 - Herstellung der Komponenten

Thermoplastisches Copolymer A

Als thermoplastische Copolymere wurden verschiedene statistische Styrol/Acrylnitril-Copolymere und alpha-Methylstyrol/Acrylnitril-Copolymere durch radikalische Lösungspolymerisation mit peroxidischer Initiierung hergestellt. Das Verhältnis von Styrol bzw. alpha-Methylstyrol zu Acrylnitril wurde variiert.

Die Viskositätszahl VZ wurde gemäß DIN EN ISO 1628-1 und -2 in einer 0.5 %igen Lösung in N,N-Dimethylformamide (DMF) bei 23° C bestimmt.

Es wurden die folgenden Copolymere A verwendet:

| | |
|---|---|
| A-I: | Styrol/Acrylnitril im Gewichtsverhältnis 65:35,<br>Viskositätszahl VZ = 80 $cm^3/g$ |
| A-II: | Styrol/Acrylnitril im Gewichtsverhältnis 65:35,<br>Viskositätszahl VZ = 60 $cm^3/g$ |
| A-III: | Styrol/Acrylnitril im Gewichtsverhältnis 81:19,<br>Viskositätszahl VZ = 70 $cm^3/g$ |
| A-IV: | alpha-Methylstyrol/Acrylnitril im Gewichtsverhältnis 70:30, Viskositätszahl VZ = 57 $cm^3/g$. |

Als weitere polymere Komponente C wurde Makrolon® 2800 als Polycarbonat C-I eingesetzt.

Pfropfcopolymer B

Es wurden zwei verschiedene Pfropfcopolymere B-I und B-II hergestellt, welche sich in der Größe der Latexpartikel unterscheiden.

Pfropfcopolymer B-I (kleinteiliges ASA Pfropfcopolymer)

Die Herstellung der Pfropfgrundlagen B1 erfolgte analog zu EP-A 0450485 (Pfropfcopolymer A, Seite 7).

a1) Herstellung der Pfropfgrundlage B1-I

16 Gew.-Teile Butylacrylat (BA) und 0.4 Gew.-Teile Dihydrodicyclopentadienylacrylat (DCPA) wurden in 150 Gew.-Teilen Wasser unter Zusatz von einem Teil des Natriumsalzes einer C12-C18-Paraffinsulfonsäure, 0,3 Gew.-Teilen Kaliumperoxodisulfat und 0,38 Gew.-Teilen Natriumbicarbonat unter Rühren auf 60°C erwärmt. 10 Minuten nach dem Anspringen der Polymerisationsreaktion wurde innerhalb von 3 Stunden eine Mischung aus 82 Gew.-Teilen Butylacrylat und 1.6 Gew.-Teilen DCPA zugegeben. Nach Beendigung der Monomer-Zugabe ließ man noch eine Stunde nachreagieren.

Der erhaltene Kautschuk des vernetzten Butylacrylat-Polymer hatte einen Feststoffgehalt von 40 Gew.-%. Die Teilchengrößenverteilung war eng (Quotient Q = 0,20).

a2) Herstellung des Pfropfcopolymers B-I

4200 g der nach Vorschrift (a1) hergestellten Latexemulsion wurden mit 2300 g Wasser und 5,4 g Kaliumperoxodisulfat gemischt und unter Rühren auf 65° C erwärmt. Nach Erreichen der Reaktionstemperatur wurde im Laufe von 3 Stunden eine Mischung aus 840 g Styrol und 280 g Acrylnitril dazu dosiert. Nach Beendigung der Zugabe wurde die Emulsion noch 2 Stunden bei 65° C gehalten. Die mittlere Teilchengröße des erhaltenen Pfropfcopolymer-Latex betrug 95 nm. Die Aufarbeitung erfolgte wie unten beschrieben.

Pfropfcopolymer B-II (großteiliges ASA-Pfropfcopolymer)

b1) Herstellung der Pfropfgrundlage B1-II

Zu einer Vorlage aus 2,5 Gew.-Teilen des wie in a1) beschrieben hergestellten Kautschuk wurden nach Zugabe von 50 Gew.-Teilen Wasser und 0,1 Gew.-Teilen Kaliumperoxodisulfat im Verlauf von 3 Stunden einerseits eine Mischung aus 49 Gew.-Teilen Butylacrylat und 1 Gew.-Teil DCPA und andererseits eine Lösung von 0,5 Gew.-Teilen des Natriumsalzes einer $C_{12}$- bis $C_{18}$-Paraffinsulfonsäure in 25 Gew.-Teilen Wasser zugegeben. Dabei betrug die Temperatur der Vorlage 60°C. Nach Zulaufende wurde zwei Stunden nachpolymerisiert. Der erhaltene Kautschuk hatte einen Feststoffgehalt von 40 %. Die mittlere Teilchengröße (Gewichtsmittel) des Kautschuks wurde zu 480 nm ermittelt.

b2) Herstellung des Pfropfcopolymers B-II

150 Gew.-Teile des nach b1) erhaltenen Kautschuk wurden mit 15 Gew.-Teilen Styrol und 60 Gew.-Teilen Wasser gemischt und unter Rühren nach Zusatz von weiteren 0,03 Gew.-Teilen Kaliumperoxodisulfat und 0,05 Gew.-Teilen Lauroylperoxid 3 Stunden auf 65°C erhitzt. Die erhaltene Dispersion wurde mit 25 Gew.-Teilen eines Gemisches aus Styrol und Acrylnitril im Verhältnis 75:25 weitere 4 Stunden polymerisiert. Die mittlere Teilchengröße des erhaltenen Pfropfcopolymer-Latex betrug 530 nm. Die Aufarbeitung erfolgte wie unten beschrieben.

Fällung der Pfropfcopolymere B

Die Pfropfcopolymere B-I und B-II wie oben beschrieben wurden getrennt voneinander mit einer Magnesiumsulfat-Lösung kontinuierlich koaguliert.

Dazu wurde jeweils das Pfropfcopolymer B-I oder B-II, und eine Magnesiumsulfatlösung (18 Gew.-%) kontinuierlich in einen ersten gerührten Fällbehälter dosiert. Der Fällbehälter wurde durch Dampfeinspeisung auf 60 °C im Falle von Pfropfcopolymer B-I und auf 88 °C im Falle von Pfropfcopolynmer B-II gehalten. Dabei wurden folgende Konzentrationen im Fällbehälter I eingehalten:

- 0,8 Gew.-% Magnesiumsulfat, bezogen auf die gesamte wässrige Phase,

- 18 Gew.-% Pfropfcopolymere B-I oder B-II, gerechnet als Feststoff, bezogen auf alle im Fällbehälter dosierten Stoffe.

Die mittlere Verweilzeit im ersten Fällbehälter betrug 15 Minuten. Zur Vervollständigung der Fällung wurde der Inhalt aus dem ersten Fällbehälter kontinuierlich in einen zweiten Fällbehälter dosiert. Die mittlere Verweilzeit im zweiten Fällbehälter betrug 15 Minuten und die Temperatur wurde bei ca. 92 bis 94 °C gehalten. Das gefällte Pfropfcopolymer

aus dem zweiten Fällbehälter wurde nach dem Abkühlen auf 70°C durch Zentrifugation von der wässrigen Phase abgetrennt, so dass ein wasserfeuchtes Pfropfcopolymer B mit einer Restfeuchte von 30 Gew.-% erhalten wurde.

Beispiel 2: Trocknung der Pfropfcopolymere B

Das nach der Fällung und Entwässerung erhaltene Pfropfcopolymer B-I oder B-II wurde auf verschiedene Art getrocknet. Es wurde je einer der folgenden Trocknungsschritte durchgeführt, wobei diese im weiteren beschriebenen werden:

2A Trocken im Fließbetttrockner
2B Trocknen im Stromtrockner
2C Trocknen im Extruder

Beispiel 2A: Trocknen des Pfropfcopolymers B mit einem Fließbetttrockner

Das wasserfeuchte Pfropfcopolymer B (gefälltes Pfropfcopolymer B-I oder B-II wie oben beschrieben hergestellt) mit einer Restfeuchte von 30 Gew.-% wurde in einem Batch-Fließbetttrockner mit Luft als Trägergas getrocknet. Die Verweilzeit betrug jeweils 25 Minuten. Die Temperatur der Luft betrug etwa 110 °C und die Produkttemperatur lag im Bereich von 39 bis 81 °C, wobei der zeitliche Verlauf der Produkttemperatur und der Trocknungsgastemperatur in der folgenden Tabelle 1 wiedergegeben werden.

Tabelle 1: Temperaturverlauf bei Batch-Fließbett-Trocknung

| Z eit [min] | 0 | 5 | 10 | 15 | 20 | 25 |
|---|---|---|---|---|---|---|
| Temperatur Trocknungsgas TG [°C] | 109,5 | 109,4 | 109,6 | 109,6 | 108,0 | 96,6 |
| Produkttemperatur TP [°C] | | 38,9 | 38,1 | 38,0 | 44,4 | 80,8 |

Die Restfeuchte betrug nach dem Trocknen 0,5 Gew.-%. Das Material wurde in Form eines feinteiligen Pulvers mit einer mittleren Korngröße $d_{50}$ von 800 $\mu$m (ermittelt nach Siebanalyse gemäß ISO 3310-1) erhalten.

Beispiel 2B: Trocknen der Pfropfcopolymere B mit einem Stromtrockner

Das wasserfeuchte Pfropfcopolymer (gefälltes Pfropfcopolymer B-I oder B-II wie oben beschrieben) mit einer Restfeuchte von 30 Gew.-% wurde in einem Stromtrockner unter Verwendung einer Stickstoff/Luftmischung mit einem Anteil von kleiner 1 Vol.-% Sauerstoff als Trägergas getrocknet. Typischerweise betrug die Verweilzeit des Pfropfcopolymers B 5 bis 10 Sekunden bis es seine Endrestfeuchte erreicht hatte. Die Temperatur des Trägergases betrug 145 °C und die Produkttemperatur betrug 85 °C. Die Restfeuchte betrug nach dem Trocknen 0,7 Gew.-%. Das Material wurde in Form eines feinteiligen Pulvers mit einer mittleren Korngröße $d_{50}$ von 600 $\mu$m (ermittelt nach Siebanalyse gemäß ISO 3310-1) erhalten.

Beispiel 2C: Trocknen des Pfropfcopolymers B in einem Extruder bei gleichzeitiger Verarbeitung zu Formkörpern

Das Trocknen des wasserfeuchten Pfropfcopolymers B (gefälltes Pfropfcopolymer B-I oder B-II wie oben beschrieben) mit einer Restfeuchte von 30 Gew.-% wurde entsprechend DE-B 4402394 durchgeführt. Hierzu wurde das Pfropfcopolymer B mechanisch auf einem Zweischneckenextruder entwässert. Das thermoplastische Copolymer A wurden als Schmelze in den Zweischneckenextruder eingeführt und mit dem Pfropfcopolymer B vermischt, wobei die ASA-Formmassen nach Extrusion über eine Düsenleiste und Granulierung als Granulate erhalten wurden. Die Formmasse wurde in einem Schritt als Granulat erhalten und anschließend zu Formkörpern verarbeitet. Die Zusammensetzungen der ASA-Formmasse nach Trocknung im Extruder sind in Tabelle 2 unten angegeben.

Beispiel 3: Herstellen von ASA-Formmassen und -Formkörpern

Die oben beschriebenen Pfropfcopolymere B-I und B-II, welche gemäß den Beispielen 2A und 2B aufbereitet und getrocknet wurden, wurden auf einem Extruder ZSK 25 (Hersteller Coperion) mit jeweils einem thermoplastische Copolymer A und ggf. der Polycarbonat-Komponente C1 vermischt und granuliert. Die Anteile sind in der Tabelle 2 unten angegeben.

Beispiel 4: Untersuchung der Oberflächenhomogenität

Aus den oben beschriebenen Granulaten wurden Plättchen (75 x 50 x 2.5 mm) in einem Spritzgusswerkzeug mit polierter Oberfläche bei einer Massetemperatur von 240 °C und einer Werkzeugtemperatur von 70 °C hergestellt.

Um feucht-warme Umgebungsbedingungen zu simulieren, wurden die Plättchen (75 x 50 x 2.5 mm) 8 Stunden in entionisiertem Wasser bei 80 °C gelagert. Nach Trocknung der Plättchen wurden die mit bloßem Auge sichtbaren Oberflächendefekte in einem Sehabstand von ca. 30 bis 40 cm ausgezählt und als Anzahl der Oberflächenstörungen (Stippen) angegeben.

Es wurden je Formmasse jeweils vier Plättchen getestet. Bei dem Test wurde nur die polierte Fläche bewertet. Das heißt es wurde die Anzahl der Oberflächenstörungen auf einer Testfläche von insgesamt 150 $cm^2$ ausgezählt und in der Tabelle 2 unten angegeben.

Bei den Formmassen F1 bis F9 handelt es sich um erfindungsgemäße Formmassen, d.h. um Formmassen enthaltend erfindungsgemäß getrocknete Pfropfcopolymere B-I und/oder B-II. Die Formmassen F10 bis F13 sind Vergleichsbeispiele enthaltend nichterfindungsgemäß getrocknete Pfropfcopolymere B-I und/oder B-II.

Aus den Prüfergebnissen wird ersichtlich, dass die mit dem erfindungsgemäßen Verfahren hergestellten Formmassen bzw. daraus hergestellte Formteile eine deutlich niedrige Anzahl von Oberflächenstörungen (Stippen) und damit eine bessere Oberflächenhomogenität nach der Lagerung in feucht-warmer Umgebung aufweisen, während bei den nicht erfindungsgemäßen Formmassen eine deutlich höhere Anzahl von Oberflächenstörungen auftritt.

Tabelle 2: Zusammensetzungen und Prüfdaten der Formmassen F1 bis F13

| Formmasse | Trocknung von B | B-I | B-II | A-I | A-II | A-III | A-IV | C-I | Oberflächenstörungen |
|---|---|---|---|---|---|---|---|---|---|
| | | Gew.-% | Gew.-% | Gew.-% | Gew.-% | Gew.-% | Gew.-% | Gew.-% | Anzahl |
| F1 | 2A Fließbetttrockner | 50 | | 50 | | | | | 4 |
| F2 | | | 48 | 52 | | | | | 3 |
| F3 | | 20 | 10 | 30 | | | 40 | | 0 |
| F4 | | 30 | | 70 | | | | | 1 |
| F5 | | 25 | 10 | 10 | 55 | | | | 1 |
| F6 | | 16 | 17 | | | 33 | | 34 | 0 |
| F7 | | 6 | 6 | | | 13 | | 75 | 0 |
| F8 | 2B Stromtrockner | 50 | | 50 | | | | | 2 |
| F9 | | | 48 | 52 | | | | | 0 |
| F10 | 2C Extruder | 50 | | 50 | | | | | >25 |
| F11 | | | 48 | 52 | | | | | >25 |
| F12 | | 20 | 10 | 30 | | | 40 | | 21 |
| F13 | | 16 | 17 | | | 33 | | 34 | 24 |

Es wird vermutet, dass durch die Trocknung im Fließbetttrockner oder in einem Stromtrockner eine besonders schnelle und gleichmäßige Trocknung stattfindet, was zu kleinen Salzeinlagerungen (z.B. Salzkristallen) führt, welche wenige mit bloßem Auge sichtbare Oberflächenstörungen hervorrufen. Bei der Verwendung eines Fließbetttrockners hat sich eine mittlere Verweilzeit von etwa 20 bis 30 min als besonders vorteilhaft erwiesen. Bei der Verwendung eines Stromtrockners hat sich eine mittlere Verweilzeit von etwa 1 bis 10 Sekunden als besonders vorteilhaft erwiesen.

Beispiel 5: Untersuchung des Gehalts an Restmonomeren

Die oben beschriebenen Pfropfcopolymere B-I und B-II (jeweils wie in Beispiel 1 beschreiben hergestellt und gefällt) wurden jeweils in einem Fließbetttrockner wie in Beispiel 2A beschrieben für 50 min getrocknet, wobei in bestimmten Zeitabständen Proben des Pfropfcopolymers genommen wurden. Der Gehalt an Acrylnitril, Styrol und Ethylbenzol wurden mittels Headspace-Gaschromatographie mit externer Kalibrierung und Verwendung von para-Xylol als internem Standard bestimmt. Hierzu wurde jeweils 1 g des Pfropfcopolymer-Pulvers in 5 g Dimethylsulfoxid mit zugesetztem internem Standard durch Schütteln dispergiert und bei einer Probentemperatur von 94 °C per Headspace-Gaschromatographie gemessen. Die Temperatur der Injektionsnadel betrug 98 °C und die Temperatur der Transferleitung zwischen dem Headspace-Autosampler und dem Gaschromatograph betrug 135 °C. Als Headspace-Autosampler kam ein Perkin-Elmer HS-40 und als Gaschromatograph ein Hewlett Packard 5890 Series II zum Einsatz. Die Nachweisgrenze beträgt für Styrol etwa 10 ppm, für Acrylnitril etwa 3 ppm und für Ethylbenzol etwa 6 ppm.

Die Restfeuchte (Wassergehalt) und der Gehalt an Restmonomeren in Abhängigkeit der Trocknungszeit sind in der folgenden Tabelle 3 zusammengestellt. Es zeigte sich, dass insbesondere der Gehalt an Styrol weiter deutlich gesenkt wurde, wenn nach dem Erreichen einer Restfeuchte von etwa 0,4 bis 0,5 % für weitere 5 bis 10 min getrocknet wurde. Die Restfeuchte (RF) und der Gehalt an Styrol (S) in Abhängigkeit der Trocknungszeit sind zudem in den Figuren 1 (Pfropfcopolmer B-I) und 2 (Pfropfcopolmer B-II) dargestellt.

Tabelle 3: Gehalt an Restmonomeren

| Pfropfcopolmer | Trocknungszeit [min] | Restfeuchte [%] | Acrylnitril [ppm] | Styrol [ppm] | Ethylbenzol [ppm] |
|---|---|---|---|---|---|
| B-I | 0 | 31,5 | 108 | 598 | 102 |
| B-I | 15 | 7,8 | <3 | 260 | 26 |
| B-I | 20 | 0,4 | <3 | 180 | 12 |
| B-I | 25 | 0,3 | <3 | <10 | <6 |
| B-I | 30 | 0,3 | <3 | <10 | <6 |
| B-I | 35 | 0,1 | <3 | <10 | <6 |
| B-I | 40 | 0,4 | <3 | <10 | <6 |
| B-I | 49 | 0,2 | <3 | <10 | <6 |
| B-I | 50 | 0,1 | <3 | <10 | <6 |
| B-II | 0 | 35,7 | 62 | 622 | 101 |
| B-II | 15 | 8,9 | <3 | 252 | 22 |
| B-II | 20 | 0,5 | <3 | 201 | 18 |
| B-II | 25 | 0,5 | <3 | 181 | 14 |
| B-II | 30 | 0,1 | <3 | 28 | <6 |
| B-II | 35 | 0,2 | <3 | <10 | <6 |
| B-II | 40 | 0,2 | <3 | <10 | <6 |
| B-II | 49 | 0,2 | <3 | <10 | <6 |
| B-II | 50 | 0,2 | <3 | <10 | <6 |

## Patentansprüche

**1.** Verfahren zur Herstellung einer thermoplastischen Formmasse enthaltend:

A: 5 bis 90 Gew.-%, mindestens eines thermoplastischen Copolymers A, hergestellt aus:

A1: 50 bis 95 Gew.-%, bezogen auf das Copolymer A, eines Monomers A1, ausgewählt aus Styrol, α-Methylstyrol oder Mischungen von Styrol und mindestens einem weiteren Monomer ausgewählt aus α-Methylstyrol, p-Methylstyrol und $C_1$-$C_8$-Alkyl(meth)acrylat,
A2: 5 bis 50 Gew.-%, bezogen auf das Copolymer A, eines Monomers A2, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren,

B: 5 bis 70 Gew.-%, mindestens eines Pfropfcopolymers B, enthaltend:

B1: 50 bis 90 Gew.-%, bezogen auf das Pfropfcopolymer B, mindestens einer Pfropfgrundlage B1, welche erhalten wird durch Emulsionspolymerisation von:

B11: 70 bis 99,9 Gew.-%, bezogen auf die Pfropfgrundlage B1, mindestens eines $C_1$-$C_8$-Alkyl(meth)acrylat, als Monomer B11;
B12: 0,1 bis 10 Gew.-%, bezogen auf die Pfropfgrundlage B1, mindestens eines polyfunktionalen vernetzenden Monomers B12;
B13: 0 bis 29,5 Gew.-%, bevorzugt 0 bis 20 Gew.-%, besonders bevorzugt 0 bis 10 Gew.-%, bezogen auf die Pfropfgrundlage B1, mindestens eines weiteren Monomers B13 ausgewählt aus Styrol, α-Methylstyrol, $C_1$-$C_4$-Alkylstyrol, Acrylnitril, Methacrylnitril, Isopren, Butadien, Chloropren, Methylmethacrylat, Alkylenglykol-di(meth)acrylat und Vinylmethylether;

wobei die Summe B11 + B12 + B13 gerade 100 Gew.-% ergibt; und
B2: 10 bis 50 Gew.-%, bezogen auf das Pfropfcopolymer B, mindestens einer Pfropfhülle B2, welche erhalten wird durch Emulsionspolymerisation in Gegenwart der mindestens einen Pfropfgrundlage B1 von:

B21: 50 bis 100 Gew.-%, bezogen auf die Pfropfhülle B2, eines Monomers B21, ausgewählt aus Styrol, α-Methylstyrol oder Mischungen von Styrol und mindestens einem weiteren Monomer ausgewählt aus α-Methylstyrol, p-Methylstyrol und $C_1$-$C_4$-Alkyl(meth)acrylat;
B22: 0 bis 50 Gew.-%, bezogen auf die Pfropfhülle B2, eines Monomers B22, ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren;

wobei die Gesamtsumme aus Pfropfgrundlage B1 und Pfropfhülle B2 gerade 100 Gew.-% ergibt; und
C: 0 bis 90 Gew.-%, mindestens einer weiteren polymeren Komponente C, und
K: 0 bis 40 Gew.-%, mindestens einer weiteren Komponente K ausgewählt aus Additiven und Hilfsmitteln,

umfassend die Schritte:

a) Fällen des mindestens einen Pfropfcopolymers B nach der Emulsionspolymerisation durch Zugabe einer Fällungslösung enthaltend mindestens ein Salz;
b) mechanisches Entwässern des gefällten Pfropfcopolymers B, bevorzugt mittels Zentrifugation und/oder Filtration, wobei ein Pfropfcopolymer B mit einem Wassergehalt von kleiner oder gleich 50 Gew.-% erhalten wird;
c) Trocknen des entwässerten Pfropfcopolymers B unter Verwendung eines Trocknungsgases, wobei das Pfropfcopolymer B in dem Trocknungsgas bewegt wird und das Trocknungsgas eine Temperatur im Bereich von 50 bis 160 °C aufweist;
d) Vermischen des thermoplastischen Copolymers A, des getrockneten Pfropfcopolymers B, optional der weiteren polymeren Komponente(n) C und optional der weiteren Komponente(n) K.

**2.** Verfahren gemäß Anspruch 1, **dadurch gekennzeichnet, dass** das Trocknen des entwässerten Pfropfcopolymers B in Schritt c) unter Verwendung eines Fließbetttrockners und/oder einem Stromtrockners erfolgt.

**3.** Verfahren gemäß einem der Ansprüche 1 oder 2, **dadurch gekennzeichnet, dass** das Pfropfcopolymer B einen mittleren Partikeldurchmesser $d_{50}$ im Bereich von 50 bis 1.000 nm aufweist.

**4.** Verfahren gemäß einem der Ansprüche 1 bis 3, **dadurch gekennzeichnet, dass** das Pfropfcopolymer B enthält:

10 bis 50 Gew.-%, bezogen auf das Pfropfcopolymer B, mindestens einer Pfropfhülle B2, welche erhalten wird durch Emulsionspolymerisation von:

B21: 50 bis 95 Gew.-%, bezogen auf die Pfropfhülle B2, des Monomers B21, und
B22: 5 bis 50 Gew.-%, bezogen auf die Pfropfhülle B2, des Monomers B22,

wobei die Summe B21 und B22 gerade 100 Gew.-% ergibt.

**5.** Verfahren gemäß einem der Ansprüche 1 bis 4, **dadurch gekennzeichnet, dass** das mindestens eine Pfropfcopolymer B enthält:

B1: 55 bis 65 Gew.-%, bezogen auf das Pfropfcopolymer B, der mindestens einen Pfropfgrundlage B1,
B2: 35 bis 45 Gew.-%, bezogen auf das Pfropfcopolymer B, mindestens einer Pfropfhülle B2, welche erhalten wird durch Emulsionspolymerisation in Gegenwart der mindestens einen Pfropfgrundlage B1 von:

B21: 65 bis 80 Gew.-%, bezogen auf die Pfropfhülle B2, eines Monomers B21, ausgewählt aus Styrol und $\alpha$-Methylstyrol;
B22: 20 bis 35 Gew.-%, bezogen auf die Pfropfhülle B2, eines Monomers B22, ausgewählt aus Acrylnitril oder Mischungen von Acrylnitril und Methacrylnitril,

wobei die Gesamtsumme aus Pfropfgrundlage B1 und Pfropfhülle B2 gerade 100 Gew.-% ergibt.

**6.** Verfahren gemäß einem der Ansprüche 1 bis 5, **dadurch gekennzeichnet, dass** das mindestens eine Pfropfcopolymer B enthält:

B1: 50 bis 70 Gew.-%, bezogen auf das Pfropfcopolymer B, der mindestens einen Pfropfgrundlage B1,
B2’: 10 bis 30 Gew.-%, bezogen auf das Pfropfcopolymer B, mindestens einer Pfropfhülle B2’, welche erhalten wird durch Emulsionspolymerisation in Gegenwart der mindestens einen Pfropfgrundlage B1 von:
B21’: 100 Gew.-%, bezogen auf die Pfropfhülle B2’, eines Monomers B21’, ausgewählt aus Styrol, $\alpha$-Methylstyrol oder Mischungen von Styrol und mindestens einem weiteren Monomer ausgewählt aus $\alpha$-Methylstyrol, p-Methylstyrol und $C_1$-$C_4$-Alkyl(meth)acrylat; sowie
B2": 20 bis 40 Gew.-%, bezogen auf das Pfropfcopolymer B, mindestens einer Pfropfhülle B2", welche erhalten wird durch Emulsionspolymerisation in Gegenwart der mit B2’ gepfropften Pfropfgrundlage B1 von:

B21":50 bis 95 Gew.-%, bezogen auf die Pfropfhülle B2", eines Monomers B21", ausgewählt aus Styrol, $\alpha$-Methylstyrol oder Mischungen von Styrol und mindestens einem weiteren Monomer ausgewählt aus $\alpha$-Methylstyrol, p-Methylstyrol und $C_1$-$C_4$-Alkyl(meth)acrylat; und
B22":5 bis 50 Gew.-%, bezogen auf die Pfropfhülle B2", eines Monomers B22", ausgewählt aus Acrylnitril oder Mischungen von Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren.

**7.** Verfahren gemäß einem der Ansprüche 1 bis 6, **dadurch gekennzeichnet, dass** das Trocknen in Schritt c) mittels eines Trocknungsgases ausgewählt aus Luft und/oder Stickstoff durchgeführt wird,
wobei das Trocknen unter Verwendung eines Fließbetttrockners durchgeführt wird und das Trocknungsgas eine Temperatur im Bereich von 50 bis 160 °C aufweist
oder wobei das Trocknen unter Verwendung eines Stromtrockners durchgeführt wird und das Trocknungsgas eine Temperatur im Bereich von 100 bis 160 °C aufweist.

**8.** Verfahren gemäß einem der Ansprüche 1 bis 7, **dadurch gekennzeichnet, dass** das Trocknen in Schritt c) mittels eines Trocknungsgases ausgewählt aus Luft und/oder Stickstoff durchgeführt wird,
wobei das Trocknen unter Verwendung eines Fließbetttrockners durchgeführt wird, das Trocknungsgas eine Temperatur im Bereich von 50 bis 160 °C, aufweist und die mittlere Verweilzeit des Pfropfcopolymers B im Fließbetttrockner 1 bis 60 min beträgt;
oder wobei das Trocknen unter Verwendung eines Stromtrockners durchgeführt wird, das Trocknungsgas eine Temperatur m Bereich von 100 bis 160 °C aufweist und die mittlere Verweilzeit des Pfropfcopolymers B im Stromtrockner 1 bis 300 Sekunden beträgt.

9. Verfahren gemäß einem der Ansprüche 1 bis 8, **dadurch gekennzeichnet, dass** das getrocknete Pfropfcopolymer B erhalten in Schritt c) einen Wassergehalt im Bereich von 0,05 bis 0,6 Gew.-% und einen Gesamtgehalt an Restmonomeren von kleiner 200 ppm, bezogen auf das trockene Pfropfcopolymer B, aufweist.

10. Verwendung eines Fließbetttrockners und/oder eines Stromtrockners bei der Herstellung einer thermoplastischen Formmasse, wie in Anspruch 1 beschrieben, zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verbesserung der Oberflächenqualität der thermoplastischen Formmasse.

11. Verwendung gemäß Anspruch 10, **dadurch gekennzeichnet, dass** die Trocknung des Pfropfcopolymers B in einem Fließbetttrockner und/oder einem Stromtrockner mittels eines Trocknungsgases ausgewählt aus Luft und/oder Stickstoff durchgeführt wird, und das Trocknungsgas eine Temperatur im Bereich von 50 bis 160 °C aufweist.

12. Verwendung gemäß einem der Ansprüche 10 oder 11, **dadurch gekennzeichnet, dass** die Verbesserung der Oberflächenqualität der thermoplastischen Formmasse eine Verminderung der Oberflächenstörungen nach einer Lagerung der Formmasse bei einer Temperatur im Bereich von 20 bis 100 °C und einer relativen Luftfeuchtigkeit im Bereich von 65 bis 100 % und/oder der direkten Einwirkung von flüssigem Wasser bei einer Temperatur im Bereich von 30 bis 100 °C auf die Oberfläche der Formmasse umfasst.

13. Verwendung eines Fließbetttrockners und/oder eines Stromtrockners bei der Herstellung einer thermoplastischen Formmasse wie in Anspruch 1 beschrieben zur Trocknung des Pfropfcopolymers B, welches einen Wassergehalt von kleiner oder gleich 50 Gew.-% aufweist, nach der Emulsionspolymerisation, Fällung und mechanischen Entwässerung des Pfropfcopolymers B zur Verminderung des Gesamtgehaltes an Restmonomeren im Pfropfcopolymer B.

14. Thermoplastische Formmasse erhältlich durch ein Verfahren gemäß einem der Ansprüche 1 bis 9, wobei die thermoplastische Formmasse Salzeinlagerungen enthält, und wobei mindestens 80 %, bezogen auf die gesamte Anzahl Salzeinlagerungen, der Salzeinlagerungen eine Größe kleiner 0,3 mm aufweisen.

15. Formteil hergestellt aus einer thermoplastischen Formmasse gemäß Anspruch 14.

## Claims

1. Process for the production of a thermoplastic molding composition comprising:

A: from 5 to 90% by weight of at least one thermoplastic copolymer A, produced from:

A1: from 50 to 95% by weight, based on the copolymer A, of a monomer A1 selected from styrene, $\alpha$-methylstyrene and mixtures of styrene with at least one other monomer selected from $\alpha$-methylstyrene, p-methylstyrene and $C_1$-$C_8$-alkyl (meth) acrylate,
A2: from 5 to 50% by weight, based on the copolymer A, of a monomer A2 selected from acrylonitrile and mixtures of acrylonitrile with at least one other monomer selected from methacrylonitrile, acrylamide, vinyl methyl ether, anhydrides of unsaturated carboxylic acids and imides of unsaturated carboxylic acids,

B: from 5 to 70% by weight of at least one graft copolymer B comprising:

B1: from 50 to 90% by weight, based on the graft copolymer B, of at least one graft base B1 which is obtained via emulsion polymerization of:

B11: from 70 to 99.9% by weight, based on the graft base B1, of at least one $C_1$-$C_8$-alkyl (meth)acrylate, as monomer B11;
B12: from 0.1 to 10% by weight, based on the graft base B1, of at least one polyfunctional crosslinking monomer B12;
B13: from 0 to 29.5% by weight, preferably from 0 to 20% by weight, particularly preferably from 0 to 10% by weight, based on the graft base B1, of at least one other monomer B13 selected from styrene, $\alpha$-methylstyrene, $C_1$-$C_4$-alkylstyrene, acrylonitrile, methacrylonitrile, isoprene, butadiene, chloroprene, methyl methacrylate, alkylene glycol di(meth)acrylate and vinyl methyl ether;

where the entirety of B11 + B12 + B13 provides precisely 100% by weight; and
B2: from 10 to 50% by weight, based on the graft copolymer B, of at least one graft shell B2 which is obtained via emulsion polymerization, in the presence of the at least one graft base B1, of:

B21: from 50 to 100% by weight, based on the graft shell B2, of a monomer B21 selected from styrene, $\alpha$-methylstyrene and mixtures of styrene with at least one other monomer selected from $\alpha$-methylstyrene, p-methylstyrene and $C_1$-$C_4$-alkyl (meth)acrylate;
B22: from 0 to 50% by weight, based on the graft shell B2, of a monomer B22 selected from acrylonitrile and mixtures of acrylonitrile with at least one other monomer selected from methacrylonitrile, acrylamide, vinyl methyl ether, anhydrides of unsaturated carboxylic acids and imides of unsaturated carboxylic acids;

where the entirety of graft base B1 and graft shell B2 provides precisely 100% by weight; and

C: from 0 to 90% by weight of at least one other polymeric component C, and
K: from 0 to 40% by weight of at least one other component K selected from additives and auxiliaries,

comprising the steps of:

a) precipitation of the at least one graft copolymer B after the emulsion polymerization procedure via addition of a precipitation solution comprising at least one salt;
b) mechanical dewatering of the precipitated graft copolymer B, preferably by means of centrifugation and/or filtration, where a graft copolymer B with water content smaller than or equal to 50% by weight is obtained;
c) drying of the dewatered graft copolymer B with the use of a drying gas, where the graft copolymer B is moved within the drying gas and the temperature of the drying gas is in the range from 50 to 160°C;
d) mixing of the thermoplastic copolymer A with the dried graft copolymer B and optionally the other polymeric component(s) C and optionally the other component(s) K.

2. Process according to Claim 1, **characterized in that** the drying of the dewatered graft copolymer B in step c) uses a fluidized-bed dryer and/or a pneumatic dryer.

3. Process according to either of Claims 1 and 2, **characterized in that** the median particle diameter $d_{50}$ of the graft copolymer B is in the range from 50 to 1000 nm.

4. Process according to any of Claims 1 to 3, **characterized in that** the graft copolymer B comprises:
from 10 to 50% by weight, based on the graft copolymer B, of at least one graft shell B2 which is obtained via emulsion polymerization of:

B21: from 50 to 95% by weight, based on the graft shell B2, of the monomer B21, and
B22: from 5 to 50% by weight, based on the graft shell B2, of the monomer B22,

where the entirety of B21 and B22 provides precisely 100% by weight.

5. Process according to any of Claims 1 to 4, **characterized in that** the at least one graft copolymer B comprises:

B1: from 55 to 65% by weight, based on the graft copolymer B, of the at least one graft base B1,
B2: from 35 to 45% by weight, based on the graft copolymer B, of at least one graft shell B2 which is obtained via emulsion polymerization, in the presence of the at least one graft base B1, of:

B21: from 65 to 80% by weight, based on the graft shell B2, of a monomer B21 selected from styrene and $\alpha$-methylstyrene;
B22: from 20 to 35% by weight, based on the graft shell B2, of a monomer B22 selected from acrylonitrile and mixtures of acrylonitrile with methacrylonitrile,

where the entirety of graft base B1 and graft shell B2 provides precisely 100% by weight.

6. Process according to any of Claims 1 to 5, **characterized in that** the at least one graft copolymer B comprises:

B1: from 50 to 70% by weight, based on the graft copolymer B, of the at least one graft base B1,
B2’: from 10 to 30% by weight, based on the graft copolymer B, of at least one graft shell B2’ which is obtained via emulsion polymerization, in the presence of the at least one graft base B1, of:
B21’: 100% by weight, based on the graft shell B2’, of a monomer B21’ selected from styrene, α-methylstyrene and mixtures of styrene with at least one other monomer selected from α-methylstyrene, p-methylstyrene and $C_1$-$C_4$-alkyl (meth)acrylate; and also
B2": from 20 to 40% by weight, based on the graft copolymer B, of at least one graft shell B2" which is obtained via emulsion polymerization, in the presence of the graft base B1 grafted with B2’, of:

B21": from 50 to 95% by weight, based on the graft shell B2", of a monomer B21" selected from styrene, α-methylstyrene and mixtures of styrene with at least one other monomer selected from α-methylstyrene, p-methylstyrene and $C_1$-$C_4$-alkyl (meth)acrylate; and
B22": from 5 to 50% by weight, based on the graft shell B2", of a monomer B22" selected from acrylonitrile and mixtures of acrylonitrile with at least one other monomer selected from methacrylonitrile, acrylamide, vinyl methyl ether, anhydrides of unsaturated carboxylic acids and imides of unsaturated carboxylic acids.

**7.** Process according to any of Claims 1 to 6, **characterized in that** the drying in step c) is carried out by means of a drying gas selected from air and/or nitrogen,
where the drying is carried out with use of a fluidized-bed dryer, and the temperature of the drying gas is in the range from 50 to 160°C,
or where the drying is carried out with use of a pneumatic dryer, and the temperature of the drying gas is in the range from 100 to 160°C.

**8.** Process according to any of Claims 1 to 7, **characterized in that** the drying in step c) is carried out by means of a drying gas selected from air and/or nitrogen,
where the drying is carried out with use of a fluidized-bed dryer, the temperature of the drying gas is in the range from 50 to 160°C, and the average residence time of the graft copolymer B in the fluidized-bed dryer is from 1 to 60 min;
or where the drying is carried out with use of a pneumatic dryer, the temperature of the drying gas is in the range from 100 to 160°C, and the average residence time of the graft copolymer B in the pneumatic dryer is from 1 to 300 seconds.

**9.** Process according to any of Claims 1 to 8, **characterized in that** the dried graft copolymer B obtained in step c) has water content in the range from 0.05 to 0.6% by weight and total content of residual monomers lower than 200 ppm, based on the dried graft copolymer B.

**10.** Use of a fluidized-bed dryer and/or of a pneumatic dryer in the production of a thermoplastic molding composition, as described in Claim 1, for the drying of the graft copolymer B, the water content of which is lower than or equal to 50% by weight, after emulsion polymerization, precipitation and mechanical dewatering of the graft copolymer B, in order to improve the surface quality of the thermoplastic molding composition.

**11.** Use according to Claim 10, **characterized in that** the drying of the graft copolymer B is carried out in a fluidized-bed dryer and/or a pneumatic dryer by means of a drying gas selected from air and/or nitrogen, and the temperature of the drying gas is in the range from 50 to 160°C.

**12.** Use according to either of Claims 10 and 11, **characterized in that** the improvement of the surface quality of the thermoplastic molding composition comprises reduction of the number of surface defects after storage of the molding composition at a temperature in the range from 20 to 100°C and at a relative humidity in the range from 65 to 100% and/or direct action of liquid water at a temperature in the range from 30 to 100°C on the surface of the molding composition.

**13.** Use of a fluidized-bed dryer and/or of a pneumatic dryer in the production of a thermoplastic molding composition, as described in Claim 1, for the drying of the graft copolymer B, the water content of which is lower than or equal to 50% by weight, after emulsion polymerization, precipitation and mechanical dewatering of the graft copolymer B, in order to reduce the total content of residual monomers in the graft copolymer B.

**14.** Thermoplastic molding composition obtainable via a process according to any of Claims 1 to 9, where the thermoplastic molding composition comprises salt inclusions and where, based on the total number of salt inclusions, the size of at least 80% of the salt inclusions is less than 0.3 mm.

**15.** Molding produced from a thermoplastic molding composition according to Claim 14.

**Revendications**

**1.** Procédé pour la préparation d'une masse à mouler thermoplastique contenant :

A : 5 à 90 % en poids d'au moins un copolymère thermoplastique A, préparé à partir de :

A1 : 50 à 95 % en poids, par rapport au copolymère A, d'un monomère A1 choisi parmi le styrène, l'α-méthylstyrène ou des mélanges de styrène et d'au moins un monomère supplémentaire choisi parmi l'α-méthylstyrène, le p-méthylstyrène et un (méth) acrylate de $C_{1-8}$-alkyle,
A2 : 5 à 50 % en poids, par rapport au copolymère A, d'un monomère A2 choisi parmi l'acrylonitrile et des mélanges d'acrylonitrile et d'au moins un monomère supplémentaire choisi parmi le méthacrylonitrile, l'acrylamide, le vinylméthyléther, des anhydrides d'acides carboxyliques insaturés et des imides d'acides carboxyliques insaturés,

B : 5 à 70 % en poids, d'au moins un copolymère greffé B, contenant :

B1 : 50 à 90 % en poids, par rapport au copolymère greffé B, d'au moins une base de greffage B1 qui est obtenue par polymérisation en émulsion de :

B11: 70 à 99,9 % en poids, par rapport à la base de greffage B1, d'au moins un (méth) acrylate de $C_{1-8}$-alkyle, en tant que monomère B11 ;
B12 : 0,1 à 10 % en poids, par rapport à la base de greffage B1, d'au moins un monomère réticulant polyfonctionnel B12 ;
B13 : 0 à 29,5 % en poids, préférablement 0 à 20 % en poids, particulièrement préférablement 0 à 10 % en poids, par rapport à la base de greffage B1, d'au moins un monomère supplémentaire B13 choisi parmi le styrène, l'α-méthylstyrène, un $C_{1-4}$-alkyl-styrène, l'acrylonitrile, le méthacrylonitrile, l'isoprène, le butadiène, le chloroprène, le méthacrylate de méthyle, un di(méth)acrylate d'alkylèneglycol et le vinylméthyléther ;

la somme B11 + B12 + B13 donnant exactement 100 % en poids ; et
B2 : 10 à 50 % en poids, par rapport au copolymère greffé B, d'au moins une enveloppe de greffage B2 qui est obtenue par polymérisation en émulsion en présence de l'au moins une base de greffage B1 de :

B21 : 50 à 100 % en poids, par rapport à l'enveloppe de greffage B2, d'un monomère B21 choisi parmi le styrène, l'α-méthylstyrène et des mélanges de styrène et d'au moins un monomère supplémentaire choisi parmi l'a-méthylstyrène, le p-méthylstyrène et un (méth) acrylate de $C_{1-4}$-alkyle ;
B22 : 0 à 50 % en poids, par rapport à l'enveloppe de greffage B2, d'un monomère B22 choisi parmi l'acrylonitrile et des mélanges d'acrylonitrile et d'au moins un monomère supplémentaire choisi parmi le méthacrylonitrile, l'acrylamide, le vinylméthyléther, des anhydrides d'acides carboxyliques insaturés et des imides d'acides carboxyliques insaturés ;

la somme totale de la base de greffage B1 et de l'enveloppe de greffage B2 donnant exactement 100 % en poids ; et

C : 0 à 90 % en poids, d'au moins un composant polymérique supplémentaire C, et
K : 0 à 40 % en poids, d'au moins un composant supplémentaire K choisi parmi des additifs et des auxiliaires,

comprenant les étapes de :

a) précipitation de l'au moins un copolymère greffé B après la polymérisation en émulsion par ajout d'une solution de précipitation contenant au moins un sel ;
b) déshydratation mécanique du copolymère greffé B précipité, préférablement au moyen d'une centrifugation et/ou d'une filtration, un copolymère greffé B doté d'une teneur en eau inférieure ou égale à 50 % en poids étant obtenu ;
c) séchage du copolymère greffé B déshydraté par l'utilisation d'un gaz de séchage, le copolymère greffé B

étant déplacé dans le gaz de séchage et le gaz de séchage présentant une température dans la plage de 50 à 160 °C ;
d) mélange du copolymère thermoplastique A, du copolymère greffé B séché, éventuellement du ou des composant(s) polymérique(s) supplémentaire(s) C et éventuellement du ou des composant(s) supplémentaire(s) K.

**2.** Procédé selon la revendication 1, **caractérisé en ce que** le séchage du copolymère greffé B déshydraté dans l'étape c) est réalisé par l'utilisation d'un séchoir à lit fluidisé et/ou d'un séchoir à flux.

**3.** Procédé selon l'une quelconque des revendications 1 et 2, **caractérisé en ce que** le copolymère greffé B présente un diamètre moyen de particule $d_{50}$ dans la plage de 50 à 1 000 nm.

**4.** Procédé selon l'une quelconque des revendications 1 à 3, **caractérisé en ce que** le copolymère greffé B contient : 10 à 50 % en poids, par rapport au copolymère greffé B, d'au moins une enveloppe de greffage B2 qui est obtenue par polymérisation en émulsion de

B21 : 50 à 95 % en poids, par rapport à l'enveloppe de greffage B2, du monomère B21, et
B22 : 5 à 50 % en poids, par rapport à l'enveloppe de greffage B2, du monomère B22,

la somme de B21 et B22 donnant exactement 100 % en poids.

**5.** Procédé selon l'une quelconque des revendications 1 à 4, **caractérisé en ce que** l'au moins un copolymère greffé B contient :

B1 : 55 à 65 % en poids, par rapport au copolymère greffé B, de l'au moins une base de greffage B1,
B2 : 35 à 45 % en poids, par rapport au copolymère greffé B, d'au moins une enveloppe de greffage B2 qui est obtenue par polymérisation en émulsion en présence de l'au moins une base de greffage B1 de :

B21 : 65 à 80 % en poids, par rapport à l'enveloppe de greffage B2, d'un monomère B21 choisi parmi le styrène et l'$\alpha$-méthylstyrène ;
B22 : 20 à 35 % en poids, par rapport à l'enveloppe de greffage B2, d'un monomère B22 choisi parmi l'acrylonitrile et des mélanges d'acrylonitrile et de méthacrylonitrile,

la somme totale de la base de greffage B1 et de l'enveloppe de greffage B2 donnant exactement 100 % en poids.

**6.** Procédé selon l'une quelconque des revendications 1 à 5, **caractérisé en ce que** l'au moins un copolymère greffé B contient :

B1 : 50 à 70 % en poids, par rapport au copolymère greffé B, de l'au moins une base de greffage B1,
B2' : 10 à 30 % en poids, par rapport au copolymère greffé B, d'au moins une enveloppe de greffage B2' qui est obtenue par polymérisation en émulsion en présence de l'au moins une base de greffage B1 de :
B21' : 100 % en poids, par rapport à l'enveloppe de greffage B2', d'un monomère B21' choisi parmi le styrène, l'$\alpha$-méthylstyrène et des mélanges de styrène et d'au moins un monomère supplémentaire choisi parmi l'$\alpha$-méthylstyrène, le p-méthylstyrène et un (méth) acrylate de $C_{1-4}$-alkyle ; ainsi que
B2" : 20 à 40 % en poids, par rapport au copolymère greffé B, d'au moins une enveloppe de greffage B2" qui est obtenue par polymérisation en émulsion en présence de la base de greffage B1 greffée par B2' de :

B21" : 50 à 95 % en poids, par rapport à l'enveloppe de greffage B2", d'un monomère B21" choisi parmi le styrène, l'$\alpha$-méthylstyrène et des mélanges de styrène et d'au moins un monomère supplémentaire choisi parmi l'$\alpha$-méthylstyrène, le p-méthylstyrène et un (méth) acrylate de $C_{1-4}$-alkyle ; et
B22" : 5 à 50 % en poids, par rapport à l'enveloppe de greffage B2", d'un monomère B22" choisi parmi l'acrylonitrile et des mélanges d'acrylonitrile et d'au moins un monomère supplémentaire choisi parmi le méthacrylonitrile, l'acrylamide, le vinylméthyléther, des anhydrides d'acides carboxyliques insaturés et des imides d'acides carboxyliques insaturés.

**7.** Procédé selon l'une quelconque des revendications 1 à 6, **caractérisé en ce que** le séchage dans l'étape c) est mis en œuvre au moyen d'un gaz de séchage choisi parmi l'air et/ou l'azote,
le séchage étant mis en œuvre par l'utilisation d'un séchoir à lit fluidisé et le gaz de séchage présentant une température dans la plage de 50 à 160 °C

ou le séchage étant mis en œuvre par l'utilisation d'un séchoir à flux et le gaz de séchage présentant une température dans la plage de 100 à 160 °C.

8. Procédé selon l'une quelconque des revendications 1 à 7, **caractérisé en ce que** le séchage dans l'étape c) est mis en œuvre au moyen d'un gaz de séchage choisi parmi l'air et/ou l'azote,
le séchage étant mis en œuvre par l'utilisation d'un séchoir à lit fluidisé, le gaz de séchage présentant une température dans la plage de 50 à 160 °C et le temps de séjour moyen du copolymère greffé B dans le séchoir à lit fluidisé étant de 1 à 60 min ;
ou le séchage étant mis en œuvre par l'utilisation d'un séchoir à flux, le gaz de séchage présentant une température dans la plage de 100 à 160 °C et le temps de séjour moyen du copolymère greffé B dans le séchoir à flux étant de 1 à 300 seconde(s).

9. Procédé selon l'une quelconque des revendications 1 à 8, **caractérisé en ce que** le copolymère greffé B séché obtenu dans l'étape c) présente une teneur en eau dans la plage de 0,05 à 0,6 % en poids et une teneur totale en monomères résiduels inférieure à 200 ppm, par rapport au copolymère greffé B séché.

10. Utilisation d'un séchoir à lit fluidisé et/ou d'un séchoir à flux lors de la préparation d'une masse à mouler thermoplastique, comme décrit dans la revendication 1, pour le séchage du copolymère greffé B qui présente une teneur en eau inférieure ou égale à 50 % en poids, après la polymérisation en émulsion, la précipitation et la déshydratation mécanique du copolymère greffé B pour l'amélioration de la qualité de surface de la masse à mouler thermoplastique.

11. Utilisation selon la revendication 10, **caractérisée en ce que** le séchage du copolymère greffé B est mis en œuvre dans un séchoir à lit fluidisé et/ou un séchoir à flux au moyen d'un gaz de séchage choisi parmi l'air et/ou l'azote, et le gaz de séchage présente une température dans la plage de 50 à 160 °C.

12. Utilisation selon l'une quelconque des revendications 10 et 11, **caractérisée en ce que** l'amélioration de la qualité de surface de la masse à mouler thermoplastique comprend une diminution des défauts de surface après un stockage de la masse à mouler à une température dans la plage de 20 à 100 °C et à une humidité relative de l'air dans la plage de 65 à 100 % et/ou de l'action directe d'eau liquide à une température dans la plage de 30 à 100 °C sur la surface de la masse à mouler.

13. Utilisation d'un séchoir à lit fluidisé et/ou d'un séchoir à flux lors de la préparation d'une masse à mouler thermoplastique comme décrit dans la revendication 1 pour le séchage du copolymère greffé B, qui présente une teneur en eau inférieure ou égale à 50 % en poids, après la polymérisation en émulsion, la précipitation et la déshydratation mécanique du copolymère greffé B par la diminution de la teneur totale de monomères résiduels dans le copolymère greffé B.

14. Masse à mouler thermoplastique pouvant être obtenue par un procédé selon l'une quelconque des revendications 1 à 9, la masse à mouler thermoplastique contenant des dépôts de sel, et au moins 80 % des dépôts de sel, par rapport au nombre total de dépôts de sel, présentant une grosseur inférieure à 0,3 mm.

15. Pièce moulée préparée à partir d'une masse à mouler thermoplastique selon la revendication 14.

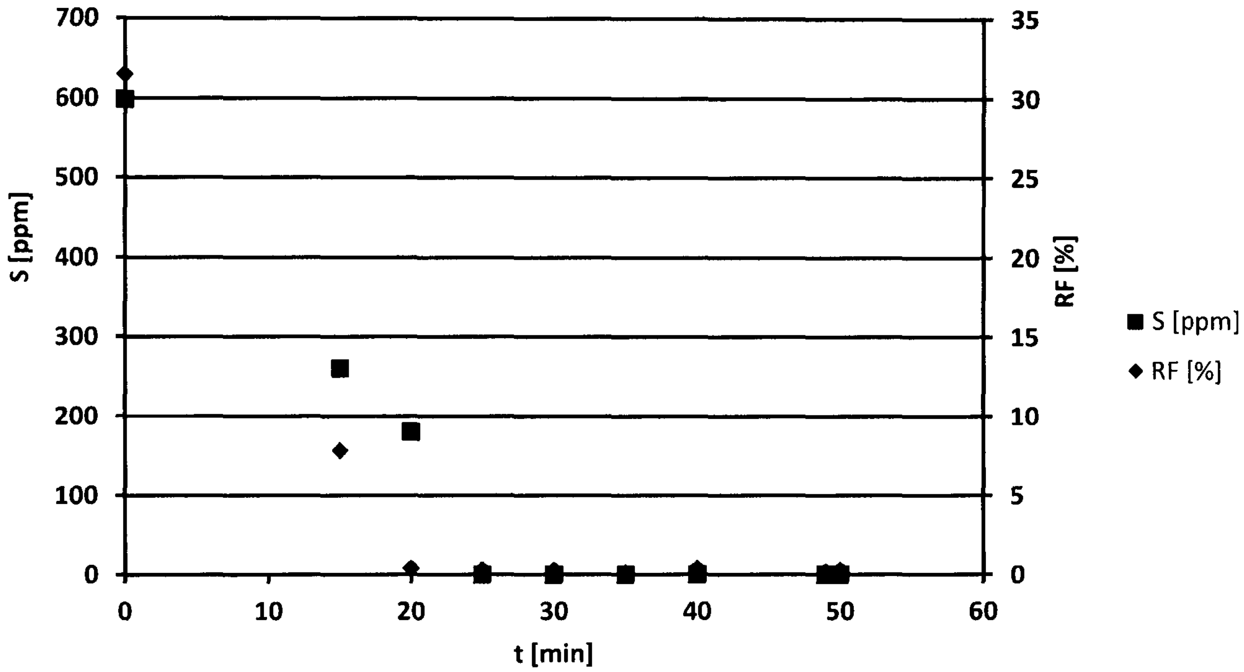
700
600
500
400
300
200
100
0
S [ppm]
35
30
25
20
15
10
5
0
RF [%]
0
10
20
30
40
50
60
t [min]
S [ppm]
RF [%]

Fig. 1

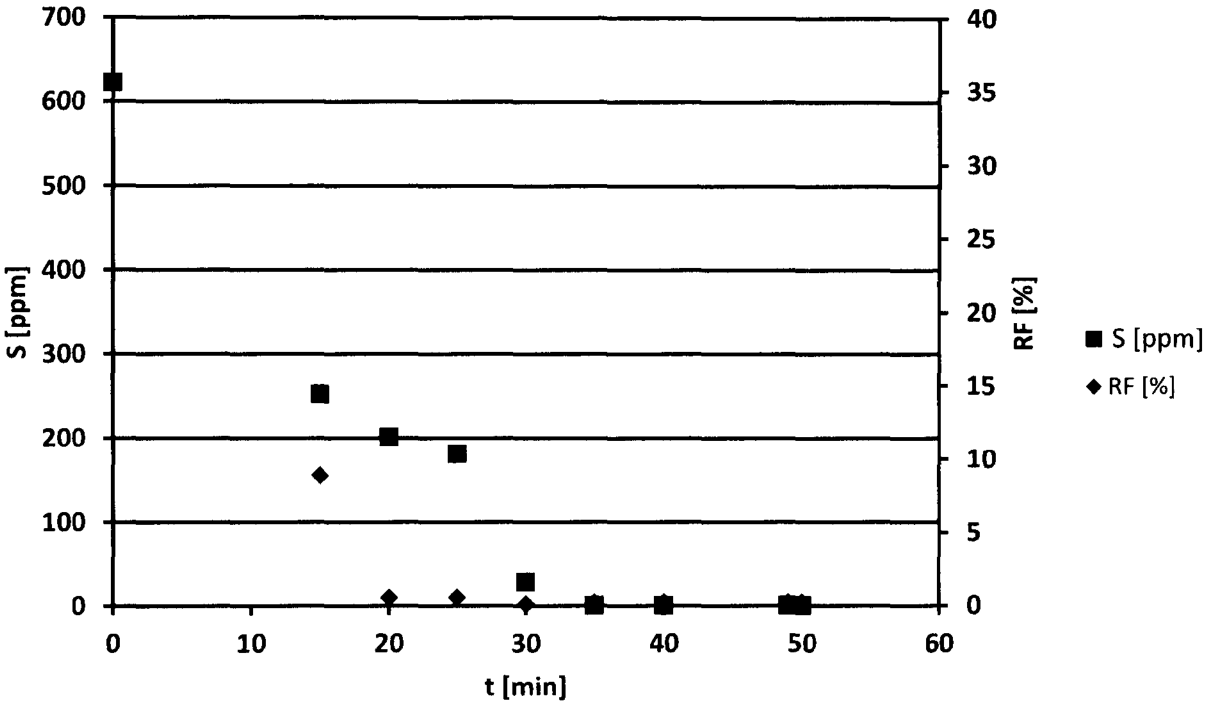
700
600
500
400
300
200
100
0
S [ppm]
40
35
30
25
20
15
10
5
0
RF [%]
0
10
20
30
40
50
60
t [min]
S [ppm]
RF [%]

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2015078751 A
- EP 0734825 A
- EP 1567596 A
- WO 2013160029 A
- WO 2013160249 A
- WO 2014122179 D1
- WO 2014122179 A
- DE 102007029010 A
- DE 3840293 A
- WO 2010094416 A
- EP 1415693 A
- DE 2420358 A
- DE 2724360 A
- DE 19713509 A
- DE 1260135 A
- DE 2826925 A
- DE 3149358 A
- DE 3414118 A
- WO 2015150223 A
- DE 1911882
- DE 3615607 A
- EP 0111260 A
- DE OS3639904 A
- DE OS3913509 A
- DE 1495626 A
- DE 2232877 A
- DE 2703376 A
- DE 2714544 A
- DE 3000610 A
- DE 3832396 A
- DE 3077934 A
- DE 10008420 A
- EP 2606073 A
- DE 3334782 A
- DE 2842005 A
- DE 3506472 A
- DE 2940024 A
- DE 3007934 A
- EP 0450485 A
- DE 4402394 B


### In der Beschreibung aufgeführte Nicht-Patentliteratur


- **ZWEITER BAND.** Trockner und Trocknungsverfahren. Springer-Verlag, 1959, 275-282
- **D. GEHRMANN et al.** Trocknungstechnik in der Lebensmittelindustrie. Behr's Verlag GmbH & Co.KG, 2009, 143-145
- **ZWEITER BAND.** Trockner und Trocknungsverfahren. Springer-Verlag, 1959, 282 ff
- **YONGCHUN Z. et al.** Explosion Risk Management of ABS Powder Processes. *Proceedings of the 8th International Conference on Measurement and Control of Granular Materials (MCGM),* 2009
- **W. SCHOLTAN ; H. LANGE ; KOLLOID-Z. U. Z.** *Polymere,* 1972, vol. 250, 782-796
- **W. WOHLLEBEN ; H. SCHUCH.** Measurement of Particle Size Distribution of Polymer Latexes. 2010, 130-153
- *Journal of Applied Polymer Science,* 1965, vol. 9, 2929-2938
- **ZWEITER BAND.** Trockner und Trocknungsverfahren. Springer-Verlag, 1959